(19) Europäisches Patentamt
European Patent Office
Office européen des brevets

(11) EP 3 825 348 A1

(12) EUROPEAN PATENT APPLICATION
published in accordance with Art. 153(4) EPC

(43) Date of publication:
**26.05.2021 Bulletin 2021/21**

(21) Application number: **19837550.3**

(22) Date of filing: **01.07.2019**

(51) Int Cl.:
***C08J 5/04*** *(2006.01)*

(86) International application number:
**PCT/JP2019/026055**

(87) International publication number:
**WO 2020/017287 (23.01.2020 Gazette 2020/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **17.07.2018 JP 2018134282**

(71) Applicant: **Toray Industries, Inc.**
**Tokyo, 103-8666 (JP)**

(72) Inventors:
- **OUCHIYAMA, Naoya**
  **Nagoya-shi, Aichi 455-8502 (JP)**
- **KOSHI, Masayuki**
  **Nagoya-shi, Aichi 455-8502 (JP)**
- **NARUSE, Yoshihiro**
  **Nagoya-shi, Aichi 455-8502 (JP)**
- **MASUNAGA, Atsushi**
  **Nagoya-shi, Aichi 455-8502 (JP)**
- **UTAZAKI, Kenichi**
  **Nagoya-shi, Aichi 455-8502 (JP)**

(74) Representative: **Hoefer & Partner Patentanwälte mbB**
**Pilgersheimer Straße 20**
**81543 München (DE)**

# (54) FIBER-REINFORCED RESIN BASE MATERIAL

(57) A fiber reinforced resin base material formed by impregnating a continuous reinforcing fiber(s) or a reinforcing fiber material having a discontinuous fiber(s) dispersed therein with a resin composition which exhibits a single glass-transition temperature before and after being heated at 400°C for one hour, wherein the resin composition is composed of (A) a thermoplastic resin having a glass-transition temperature of 100°C or more and (B) a thermoplastic resin having a glass-transition temperature of less than 100°C.

Provided is a fiber reinforced resin base material having excellent impregnation properties and thermal stability, having fewer voids, and having surface quality and high heat resistance.

EP 3 825 348 A1

## Description

TECHNICAL FIELD

The present invention relates to a fiber reinforced resin base material.

BACKGROUND ART

A fiber reinforced resin base material formed by impregnating a continuous reinforcing fiber(s) or a reinforcing fiber base material having a discontinuous reinforcing fiber(s) dispersed therein with a thermoplastic resin has not only an excellent lightweight effect but also better toughness, deposition-processibility, and recyclability than a fiber reinforced resin base material produced using a thermosetting resin, and thus, is widely deployed in various applications including: transportation equipment such as aircraft and automobiles; sports-related and electrical/electronic components; and the like. A conventional CFRTP (carbon fiber reinforced thermoplastic resin) intermediate base material has values added in terms of mechanical strength and weight saving, and besides, in recent years, has been required to have high values added such as high heat resistance, low water-absorption, high toughness, and molding-processability, creating a strong demand for technical development of a high performance CFRTP intermediate base material mainly for aircraft and automobiles.

Citation List

Patent Literature

For example, carbon fiber reinforced thermoplastic resin prepregs described in the below-mentioned Patent Literature 1 to 4 are known as structural composite materials having excellent mechanical strength, heat resistance, and molding-processability.
Patent Literature 1 discloses a molding material composed of a continuous reinforcing fiber bundle, a polyphenylene sulfide prepolymer containing at least 50 wt% or more of cyclic polyarylene sulfide and having a weight average molecular weight of less than 10,000, a polyarylene sulfide having a weight average molecular weight of 10,000 or more and a dispersity of 2.5 or less, and a thermoplastic resin.
Patent Literature 2 discloses a prepreg base material in which incisions are formed so as to cross the fiber axes of unidirectionally arranged reinforcing fibers impregnated with a matrix resin.
Patent Literature 3 discloses a thermoplastic resin prepreg composed of a thermoplastic resin having a linear or branched thermoplastic resin having a lower melting point than the thermoplastic resin, and a reinforcing fiber.
Patent Literature 4 discloses a unidirectional thermoplastic prepreg composed of a thermoplastic resin, a dendritic polyester, and a reinforcing fiber.

Patent Literature 1: WO2008/114573
Patent Literature 2: WO2017/022835
Patent Literature 3: WO2016/190194
Patent Literature 4: WO2013/008720

SUMMARY OF INVENTION

Technical Problem

The technology described in Patent Literature 1 enhances the fluidity and thereby enhances the molding-processability, but does not allow the glass-transition temperature to be single before and after heating at 400°C for one hour, and accordingly, has a problem in that the compatibility between the thermoplastic resin and the polyarylene sulfide resin is decreased, inducing thickening during the melt residence, with the result that the impregnation into the carbon fiber bundle is decreased, fuzz is generated, and the resin rich part is increased, thus decreasing the surface quality and the heat resistance.
The technology described in Patent Literature 2 allows a thermoplastic resin and a polyarylene sulfide resin to be formed into a polymer alloy, but has not successfully solved the problem in that the impregnation of the molten resin into the carbon fiber bundle is decreased.
The technology described in Patent Literature 3 allows two kinds of thermoplastic resins to be formed into an alloy in the same manner as in Patent Literature 2, but has a problem in that a decrease in the impregnation into the carbon fiber bundle causes fuzz to be generated and that non-impregnation causes voids to be generated.

The technology described in Patent Literature 4 allows a thermoplastic resin having a linear or branched polymer structure to be blended with a cyclic PPS or a cyclic PEEK, and thus enhances the fluidity and can improve the impregnation into the carbon fiber bundle, but has a problem in that a decrease in the polymer compatibility during the melt residence is accompanied by thickening, which impairs the impregnation and increases the non-impregnated part.

In view of this, a problem to be addressed by the present invention is to provide a fiber reinforced resin base material having excellent impregnation properties and thermal stability, generating fewer voids, and having surface quality and high heat resistance.

Solution to Problem

To solve the above-mentioned problem, a fiber reinforced resin base material according to the present invention has the following constituents: that is, a fiber reinforced resin base material formed by impregnating a continuous reinforcing fiber(s) or a reinforcing fiber material having a discontinuous fiber(s) dispersed therein with a resin composition which exhibits a single glass-transition temperature before and after being heated at 400°C for one hour, wherein the resin composition is composed of (A) a thermoplastic resin having a glass-transition temperature of 100°C or more and (B) a thermoplastic resin having a glass-transition temperature of less than 100°C.

In a fiber reinforced resin base material according to the present invention, the single glass-transition temperature is preferably 110°C or more.

A fiber reinforced resin base material according to the present invention preferably contains 1 part by weight or more and less than 67 parts by weight of (B) the thermoplastic resin having a glass-transition temperature of less than 100°C with respect to 100 parts by weight of (A) the thermoplastic resin having a glass-transition temperature of 100°C or more.

In a fiber reinforced resin base material according to the present invention, (B) the thermoplastic resin having a glass-transition temperature of less than 100°C is preferably a polyarylene sulfide prepolymer.

In a fiber reinforced resin base material according to the present invention, the polyarylene sulfide prepolymer is preferably composed of a mixture of a cyclic polyarylene sulfide having a weight average molecular weight of 5,000 or less and a linear polyarylene sulfide having a weight average molecular weight of 1,000 or more and less than 15,000.

In a fiber reinforced resin base material according to the present invention, (A) the thermoplastic resin having a glass-transition temperature of 100°C or more is preferably at least one selected from a polyimide, polyetheretherketone, polyetherketoneketone, polysulfone, polyarylate, polyphenyleneether, polycarbonate, polyetherimide, polyethersulfone, polyphenylsulfone, polyamideimide, and liquid crystal polymer.

Advantageous Effects of Invention

The present invention makes it possible to obtain a fiber reinforced resin base material having excellent impregnation properties and thermal stability, generating fewer voids, and having higher surface quality and high heat resistance.

DESCRIPTION OF EMBODIMENTS

Below, embodiments of the present invention will be described in detail. A fiber reinforced resin base material according to an embodiment of the present invention contains any one of the following two aspects. The first aspect is a fiber reinforced resin base material produced using a continuous reinforcing fiber(s) as a reinforcing fiber, and the second aspect is a fiber reinforced resin base material produced using, as a reinforcing fiber, a reinforcing fiber material having a reinforcing fiber(s) of a discontinuous fiber(s) dispersed therein.

In an embodiment of the present invention, a continuous reinforcing fiber in the first aspect refers to a reinforcing fiber having no break in the fiber reinforced resin base material. Examples of the form and arrangement of a continuous reinforcing fiber in an embodiment of the present invention includes unidirectionally arranged fibers, woven fabrics (cloth), knitted fabrics, braids, rattans, and the like. Among these, unidirectionally arranged reinforcing fibers are preferable because such fibers can efficiently enhance the mechanical properties in a specific direction.

A reinforcing fiber material having a discontinuous fiber(s) dispersed therein in the second aspect refers to a reinforcing fiber material in the form of a mat in which the reinforcing fiber(s) is/are broken and dispersed in a fiber reinforced resin base material. A reinforcing fiber material in a second embodiment of the present invention can be obtained by dispersing a fiber in a solution and then producing a sheet-like product by any method such as a wet method or a dry method using a carding device or an air-laying device. A dry method using a carding device or an air-laying device is preferable from the viewpoint of productivity.

A discontinuous fiber included in a reinforcing fiber material according to the second embodiment of the present invention preferably has a number average fiber length of 3 to 100 mm. The discontinuous fiber having a number average

fiber length of 3 mm or more makes it possible to achieve the reinforcing effect of the discontinuous fiber sufficiently and to further enhance the mechanical strength of the resulting fiber reinforced resin base material. The length is more preferably 5 mm or more. On the other hand, the discontinuous fiber having a number average fiber length of 100 mm or less makes it possible to enhance the fluidity during molding. The discontinuous fiber more preferably has a number average fiber length of 50 mm or less, still more preferably 30 mm or less.

The number average fiber length of a discontinuous fiber included in a fiber reinforced resin base material according to the second embodiment of the present invention can be determined by the following method. First, a sample, 100 mm × 100 mm, is cut out of a fiber reinforced resin base material, and the cutout sample is heated at 600°C in an electric oven for 1.5 hours to burn the matrix resin away. From the fiber reinforced resin base material obtained in this manner, 400 discontinuous reinforcing fiber bundles are collected randomly. The collected discontinuous reinforcing fiber bundles are measured for the fiber length in mm using a pair of calipers, and the following equation can be used to calculate the number average fiber length (Ln).

$$Ln = \Sigma Li / 400$$

(Li: measured fiber length (i = 1, 2, 3, ... 400) (unit: mm))

The number average fiber length of a discontinuous fiber can be adjusted within the above-mentioned ranges by cutting the fiber to a desired length in production of the reinforcing fiber material. The discontinuous fiber mat is not limited to any particular orientation, and is preferably isotropically dispersed from the viewpoint of moldability.

A specific raw material for a reinforcing fiber or reinforcing fiber material in the first and second embodiments is not limited to any particular material, and examples thereof include carbon fibers, metallic fibers, organic fibers, and inorganic fibers. Two or more of these may be used.

Examples of carbon fibers include PAN-based carbon fibers the raw material of which is a polyacrylonitrile (PAN) fiber; pitch-based carbon fibers the raw material of which is a petroleum tar or a petroleum pitch; cellulose-based carbon fibers the raw material of which is viscose rayon, cellulose acetate, or the like; vapor-grown carbon fibers the raw material of which is a hydrocarbon or the like; graphitized fibers thereof; and the like. Among these carbon fibers, PAN-based carbon fibers are preferably used from the viewpoint of having an excellent balance between the strength and the elastic modulus.

Examples of metallic fibers include fibers composed of metal such as iron, gold, silver, copper, aluminium, brass, or stainless steel.

Examples of organic fibers include fibers composed of an organic material such as an aramid, polybenzoxazole (PBO), polyphenylene sulfide, polyester, polyamide, or polyethylene. Examples of aramid fibers include: para-aramid fibers, which have an excellent strength and elastic modulus; and meta-aramid fibers, which have excellent flame resistance and long-term heat resistance. Examples of para-aramid fibers include polyparaphenylene terephthalamide fibers, copolyparaphenylene-3,4'-oxydiphenylene terephthalamide fibers, and the like, and examples of meta-aramid fibers include polymetaphenylene isophthalamide fibers and the like. Examples of aramid fibers that are preferably used include para-aramid fibers, which have a higher elastic modulus than meta-aramid fibers.

Examples of inorganic fibers include fibers composed of an inorganic material such as glass, basalt, silicon carbide, or silicon nitride. Examples of glass fibers include E-glass fibers (for electrical usage), C-glass fibers (for anti-corrosion usage), S-glass fibers, T-glass fibers (having a high strength and a high elastic modulus), and the like. A basalt fiber is a substance obtained by forming basalt, which is a mineral, into a fiber, and is a fiber having very high heat resistance. Basalt generally contains 9 to 25 wt% of FeO or $FeO_2$, which is an iron compound, and 1 to 6 wt% of TiO or $TiO_2$, which is a titanium compound, and these components in molten basalt can be increased in content when the basalt is formed into a fiber.

Fiber reinforced resin base materials according to the first and second embodiments of the present invention are often used as reinforcing materials, and desirably express high mechanical properties, and in order to express high mechanical properties, the reinforcing fibers preferably contain carbon fiber.

In fiber reinforced resin base materials according to the first and second embodiments of the present invention, the raw fiber material of the reinforcing fiber or reinforcing fiber material is usually composed of one reinforcing fiber bundle or a plurality of reinforcing fiber bundles that are arranged, wherein the reinforcing fiber bundle is formed by bundling multiple single fibers. The total number of filaments (the number of single fibers) of a reinforcing fiber composed of one reinforcing fiber bundle or a plurality of reinforcing fiber bundles that are arranged is preferably 1,000 to 2,000,000.

The total number of filaments of a reinforcing fiber is more preferably 1,000 to 1,000,000, still more preferably 1,000 to 600,000, particularly preferably 1,000 to 300,000, from the viewpoint of productivity. The upper limit of the total number of filaments of the reinforcing fiber only needs to be a value which makes it possible to favorably keep the productivity, dispersibility, and ease of handling, taking into consideration a balance between dispersibility and ease of handling.

In the first and second embodiments of the present invention, one reinforcing fiber bundle used as a raw fiber material is formed by bundling 1,000 to 50,000 single fibers of a reinforcing fiber which each preferably have an average diameter of 5 to 10 μm.

Fiber reinforced resin base materials in the first embodiment and second embodiment of the present invention are characterized in that the thermoplastic resin with which a continuous reinforcing fiber or a reinforcing fiber material having a reinforcing fiber(s) of a discontinuous fiber(s) dispersed therein is impregnated is the below-mentioned resin composition which exhibits a single glass-transition temperature before and after heating at 400°C for one hour.

Here, a resin composition in the present invention preferably contains 1 part by weight or more and 67 parts by weight or less of (B) the thermoplastic resin having a glass-transition temperature of less than 100°C with respect to 100 parts by weight of (A) the thermoplastic resin having a glass-transition temperature of 100°C or more.

The resin composition containing (A) a thermoplastic resin having a glass-transition temperature of 100°C or more and (B) a thermoplastic resin having a glass-transition temperature of less than 100°C exhibits a single glass-transition temperature before and after heating at 400°C for one hour, whereby the fluidity of the resin composition can be improved without significantly impairing the mechanical strength and heat resistance of (A) the thermoplastic resin having a glass-transition temperature of 100°C or more. This makes it possible to enhance the impregnation properties even at a low processing temperature, and to significantly inhibit generation of voids in the fiber reinforced resin base material. The reason for this is presumed as below-mentioned.

A blend of two or more kinds of resins is generally classified as a compatible system or an incompatible system. A compatible system under which a resin composition according to the present invention falls means a system in which two or more kinds of resins to be mixed are completely admixed with one another at the molecular level. In this case, the amorphous region, in which the resins are mixed at the molecular level, can be regarded as a single phase, and the micro-Brownian motion of the main-chain in the amorphous region occurs at a single temperature. Accordingly, such a compatible system has a single glass-transition temperature.

On the other hand, an incompatible system, in which two or more kinds of resins are not mixed with one another, exists as a two-phase (or more multi-phase) system. As a result, two or more peaks of primary dispersions exhibiting glass-transition temperatures exist at the same positions as the corresponding resins to be blended. Therefore, it is conceivable that blending a resin having a high glass-transition temperature with a resin having a low glass-transition temperature to form an incompatible system exhibiting no single glass-transition temperature causes the resin blend having a low glass-transition temperature to have a large influence, markedly decreasing the heat resistance and mechanical properties.

In the present invention, (A) the thermoplastic resin having a glass-transition temperature of 100°C or more is not limited to any particular kind; examples of such resins to be preferably used include polyimide, polyarylketone, polysulfone, polyarylate, polyphenyleneether, polycarbonate, polyetherimide, polyethersulfone, polyphenylsulfone, polyamideimide, and liquid crystal polymers; and among these, polyetheretherketone, polyetherketoneketone, polyetherimide, and polyphenylsulfone are particularly preferably used.

In the present invention, (B) the thermoplastic resin having a glass-transition temperature of less than 100°C is not limited to any particular kind; examples of such resins to be preferably used include polyarylene sulfide, polyamide resins, polybutylene terephthalate resins, polyethylene terephthalate resins, polytetrafluoroethylene resins, and olefinic polymers and copolymers containing no epoxy group, such as ethylene/1-butene copolymers; and among these, polyarylene sulfide prepolymers are preferably used.

Glass-transition temperatures can be determined by a melting temperature quasi-isothermal method or a solid viscoelasticity measurement method (a DMA method).

In a melting temperature quasi-isothermal method, a glass-transition temperature is calculated on the basis of JIS K 7121 in accordance with the following equation using a temperature-modulated DSC (manufactured by TA Instruments, Inc.).

$$\text{Glass-transition temperature} = (\text{extrapolated glass transition start temperature} + \text{extrapolated glass transition end temperature})$$

In a solid viscoelasticity measurement method, a dynamic viscoelasticity measurement device (DMS6100) manufactured by Seiko Instruments Inc. is used to measure a storage modulus and a loss modulus, followed by determining a loss tangent (loss modulus / storage modulus) and preparing a graph of the temperature and the loss tangent, and a temperature exhibiting a peak in this graph is calculated as a glass-transition temperature. Having a single glass-transition temperature means that only one primary dispersion peak exists in the loss tangent in a dynamic viscoelasticity measurement chart.

A resin composition according to the present invention has excellent thermal stability, and is characterized by

exhibiting a single glass-transition temperature even after undergoing melt residence at 400°C for one hour. The single glass-transition temperature is preferably 110°C or more, more preferably 130°C or more, still more preferably 150°C or more.

Without particular limitation, a desalting polycondensation reaction can be suitably used as a reaction for producing a polyarylketone which is particularly preferable among (A) thermoplastic resins having a glass-transition temperature of 100°C or more to be used in the present invention. Specifically, a polyarylketone can be suitably produced through a reaction in which an aromatic dihalide and a hydroquinone are polymerized in the presence of a base to give a polyether. Herein, examples of polyarylketones include not only general polyethers but also polyetheretherketones, polyether ketones, polyetherketoneketones, polyetheretherketoneketones, and the like. Examples thereof include polymers containing the below-mentioned repeating units singly or in combination.

[Chem. 1] **-Ar-C(=O)-Ar-O-Ar-O-**

**-Ar-C(=O)-Ar-O-Ar-A-Ar-O-**

**-Ar-C(=O)-Ar-O-**

**-Ar-C(=O)-Ar-C(=O)-Ar-O-Ar-A-Ar-O-**

**-Ar-$SO_2$-Ar-O-Ar-O-**

**-Ar-$SO_2$-Ar-O-Ar-A-Ar-O-**

In the formula, Ar represents a substituted or unsubstituted *p*-phenylene group, and may be the same or different. Examples of a substituent on the phenylene group include, but are not limited particularly to, a $C_{1-10}$ alkyl group, $C_{6-10}$ aryl group, $C_{7-10}$ aralkyl group, halogen atom, and the like. All of the Ars contained in one unit may be the same or different, and each of the Ars preferably represents an unsubstituted p-phenylene group.

A represents direct bonding, an oxygen atom, sulfur atom, -$SO_2$-, -CO-, or divalent hydrocarbon group. Below, a production method of a polyetheretherketone will be specifically described. That is, a polyetheretherketone is produced by polymerizing a 4,4'-dihalobenzophenone represented by the following formula and a hydroquinone represented by the following formula at a temperature of 100°C or more and less than 300°C in the presence of a base and sulfolane alone or a solvent containing sulfolane and another water-soluble solvent in combination.

[Chem. 2] **X-Ar-C(C=O)-Ar-X**

**RO-Ar-OR**

In the formula, Ar represents a substituted or unsubstituted *p*-phenylene group, and may be the same or different. X represents a halogen atom. R represents a hydrogen atom, R'- group, R'(C=O)- group, $R'_3$Si- group, or $R'_2$NC(O)- group, and may be the same or different. Here, R' represents a $C_{1-12}$ alkyl group, $C_{6-12}$ aryl group, or $C_{7-12}$ aralkyl group, and may be the same or different.

Examples of 4,4'-dihalobenzophenones represented by the above-mentioned formula include 4,4'-difluorobenzophenone, 4,4'-dichlorobenzophenone, and the like, and 4,4'-difluorobenzophenone in which Ar is an unsubstituted *p*-phenylene group and in which X is a fluorine atom is preferable. Preferable examples of hydroquinones represented by the above-mentioned formula include p-hydroquinone in which Ar is an unsubstituted *p*-phenylene group and in which R is a hydrogen atom.

In addition, it is also possible to copolymerize a 4,4'-dihalobenzophenone represented by the above-mentioned formula and a 4,4'-dihalodiphenylsulfone represented by the following formula or, for example, bis-1,4-(4-halobenzoyl)benzene among the compounds represented by X-Ar-C(=O)-Ar-C(=O)-Ar-X which is the second formula below. It is possible to copolymerize a hydroquinone represented by the above-mentioned formula and a bisphenol represented by the following formula.

[Chem. 3] **X-Ar-$SO_2$-Ar-X X-Ar-C (=O) -Ar-C (=O) -Ar-X RO-Ar-A-Ar-OR**

In the formula, Ar represents a substituted or unsubstituted *p*-phenylene group, and may be the same or different. X represents a halogen atom. R represents a hydrogen atom, R'- group, R'(C=O)- group, $R'_3$Si- group, or $R'_2$NC(O)- group, and may be the same or different. Here, R' represents a $C_{1-12}$ alkyl group, $C_{6-12}$ aryl group, or $C_{7-12}$ aralkyl group, and may be the same or different. A represents direct bonding, an oxygen atom, sulfur atom, -$SO_2$-, -CO-,

or divalent hydrocarbon atom.

The above-mentioned polymerization reaction is achieved by polycondensation based on nucleophilic substitution reaction by a base. Specific examples of the base include: alkali metal carbonates such as lithium carbonate, sodium carbonate, potassium carbonate, rubidium carbonate, and cesium carbonate; alkali metal hydrogencarbonates such as lithium hydrogencarbonate, sodium hydrogencarbonate, potassium hydrogencarbonate, rubidium hydrogencarbonate, and cesium carbonate; alkali metal hydroxides such as lithium hydroxide, sodium hydroxide, potassium hydroxide, rubidium hydroxide, and cesium hydroxide; alkylated lithium, lithium aluminium halide, lithium diisopropylamide, lithium bis(trimethylsilyl)amide, sodium hydride, sodium alkoxide, potassium alkoxide, phosphazene base, and Verkade base; and the like. One of these may be used singly, or two or more thereof may be used in combination.

The base is usually used in a larger amount than a hydroquinone on a mole basis, and the excessive amount is preferably in the range of 100 mol% or less with respect to a hydroquinone, more preferably in the range of 80 mol% or less, particularly preferably in the range of from 1 to 50%.

The polymerization reaction is advanced by heating the system. A specific reaction temperature (which means a final holding temperature) is usually less than 300°C, preferably in the range of from 200°C to 280°C, more preferably from 230°C to 270 °C, still more preferably in the range of from 240°C to 260°C. A method of producing a polyarylketone to be used in the present invention includes heating a reaction solution gradually followed by holding the temperature of the reaction solution at a final holding temperature. In this regard, any variation between approximately 10°C above and below a preset temperature is allowable when the final holding temperature is held.

In addition, the reaction system may be supplemented with an azeotropic solvent such as benzene, toluene, xylene, or chlorobenzene to efficiently remove, by azeotropy, water preexisting in the system and water generated by polycondensation reaction.

The holding time for the reaction solution at a final holding temperature is not limited to any particular value, can be suitably set taking into consideration a desired viscosity or molecular weight, and is usually 24 hours or less, preferably 12 hours or less, more preferably, ten hours or less, particularly preferably six hours or less. In the present invention, a heating rate up to 180°C is not limited to any particular value. To obtain a polyether with the degree of polymerization of interest, a heating rate from 180°C to a final holding temperature is preferably 0.5°C/min or more, more preferably 0.7°C/min or more. A heating rate in these preferable ranges makes it more likely that the degree of polymerization is increased. This is presumably because promptly heating the reaction system in a high-temperature region of 180°C or more makes it less likely that active species involved in the polymerization reaction are inactivated, and makes it possible that a predetermined polymerization reaction is highly selectively advanced. This is often observed particularly in cases where the polymerization reaction is a desalting polycondensation reaction in which an alkali metal salt is used. In addition, the heating rate is preferably 5.0°C/min. or less. A heating rate in this preferable range makes it less likely that a side reaction such as generation of a cyclic compound or the like is advanced. In this regard, a heating rate in the present invention means the average value of heating rates from 180°C to a final holding temperature. In the heating from 180°C to the final holding temperature, the variations in the heating width per one minute is desirably within ±50% with respect to the average heating rate.

There is a possibility that the generated active species are affected by trace amounts of water and oxygen which contaminate the reaction system, and thus, in respect of the scale of reaction, a plurality of monomers are preferably used in an amount of 0.4 mol or more in order to stably maintain the quality of a polyether to be produced. The amount is more preferably 0.5 mol or more, still more preferably 0.8 mol or more, particularly preferably 1 mol or more, most preferably 2 mol or more. This reaction behavior is often observed particularly in cases where the polymerization reaction is a desalting polycondensation reaction in which an alkali metal salt is used.

The concentration of the reaction solution is not limited to any particular value, and the ratio of the amount of a fed monomer to the whole fed amount (hereinafter referred to as a solution concentration) is preferably 10 wt% or more from the viewpoint of: inhibiting an undesirable side reaction which allows the generated active species to highly selectively react with a monomer or the end of the generated polymer; inhibiting a cyclic oligomer from being generated by intramolecular cyclization reaction; and the like. On the other hand, it is necessary to maintain the solubility of a generated polyether until the end of the polymerization in order to obtain a polyether having a desired degree of polymerization, the concentration of the reaction solution is preferably 30 wt% or less. Accordingly, a preferable range of solution concentration is from 10 to 30 wt%, a still more preferable range is 12 to 28 wt%, and a particularly preferable range is 14 to 26 wt%. This applies particularly in cases where the polymerization reaction is a desalting polycondensation reaction in which an alkali metal salt is used.

Sulfolane to be used in the present invention or a solvent mixture of the sulfolane and another water-soluble solvent is water-soluble, and thus, mixing the reaction mixture resulting from the reaction and a solvent containing water makes it possible to easily separate the polymerization solvent and the generated salt from the product polymer. Furthermore, repetition of washing with a solvent containing water makes it possible to remove an alkali metal salt (for example, sodium fluoride or potassium fluoride) as a byproduct arising from a base, and thus, makes it possible to easily purify the polyetheretherketone product. That is, use of a solvent mixture of sulfolane to be used in the present invention

and another water-soluble solvent makes it possible to carry out separation of a polymer solvent and purification of a polymer using a solvent containing water. Such a solvent may be, for example, a water-containing solvent which contains not only water but also a water-soluble solvent such as methanol, ethanol, or the like.

In the present invention, a polyimide to be used particularly preferably among (A) the thermoplastic resins having a glass-transition temperature of 100°C or more is a polymer having an imide bond as a repeating unit, and examples of such a polyimide include: polyetherimides having, as a repeating unit, an ether bond besides an imide bond; and polyamideimides having, as a repeating unit, an amide bond besides an imide bond. In addition, examples of polyimides which are available on the market and can be used include, but are not limited particularly to: "Ultem" (registered trademark) 1000, "Ultem" (registered trademark) 1010, "Ultem" (registered trademark) 1040, "Ultem" (registered trademark) 5000, "Ultem" (registered trademark) 6000, "Ultem" (registered trademark) XH6050, "Extem" (registered trademark) XH, and "Extem" (registered trademark) UH, which are manufactured by SABIC Inovative Plastics Japan LLC; "AURUM" (registered trademark) PD450M, manufactured by Mitsui Chemicals, Inc.; "TORLON" (registered trademark), manufactured by Solvay Specialty Polymers Japan K.K.; and the like.

In the present invention, examples of polyphenyleneethers to be used particularly preferably among (A) the thermoplastic resins having a glass-transition temperature of 100°C or more include poly(2,6-dimethyl-1,4-phenyleneether), poly(2-methyl-6-ethyl-1,4-phenyleneether), poly(2,6-diphenyl-1,4-phenyleneether), poly(2-methyl-6-phenyl-1,4-phenyleneether), poly(2,6-dichloro-1,4-phenyleneether), and the like. Additional examples include polyphenyleneether copolymers such as a copolymer of 2,6-dimethylphenol and another phenol (for example, 2,3,6-trimethyl phenol or 2-methyl-6-butyl phenol). Among these, poly(2,6-dimethyl-1,4-phenyleneether) and a copolymer of 2,6-dimethylphenol and 2,3,6-trimethylphenol are preferable, and poly(2,6-dimethyl-1,4-phenyleneether) is more preferable.

In the present invention, a polysulfone to be used particularly preferably among (A) the thermoplastic resins having a glass-transition temperature of 100°C or more is a polymer having a sulfonyl group as a repeating unit, and examples of such a polysulfone include: polyethersulfones having, as a repeating unit, an ether bond besides a sulfonyl group; and polyphenylsulfones having, as a repeating unit, a phenyl group bound via an ether chain, besides a sulfonyl group. Examples of polysulfones which are available on the market and can be used include, but are not limited particularly to: "UDEL" (registered trademark), "VERADEL" (registered trademark), and "RADEL" (registered trademark), which are manufactured by Solvay Specialty Polymers Japan K.K.; "ULTRAZONE" (registered trademark) S, "ULTRAZONE" (registered trademark) E, and "ULTRAZONE" (registered trademark) P, which are manufactured by BASF Japan Ltd.; "Sumika Excel" (registered trademark), manufactured by Sumitomo Chemical Company, Limited; and the like. A polyarylene sulfide prepolymer to be used particularly preferably among (B) the thermoplastic resins having a glass-transition temperature of less than 100°C according to the present invention is a mixture composed of a cyclic polyarylene sulfide oligomer and a linear polyarylene sulfide oligomer, is not limited to any particular production process, and will be described in detail below.

<Cyclic polyarylene sulfide (cyclic PAS) oligomer>

A cyclic polyarylene sulfide oligomer that can be preferably used in a preferable method of producing a polyarylene sulfide prepolymer (referred to as a PAS prepolymer for short in some cases) to be used in the present invention is a cyclic polyarylene sulfide represented by the following general formula (I) wherein m is an integer of 4 to 20 (hereinafter referred to as a cyclic PAS for short in some cases), and m may be not only a single integer value among the integers from 4 to 20 but also a plurality of integer values.

[Chem. 4]

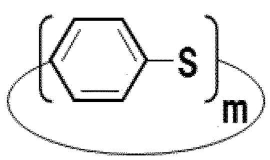

•••(I)

In cases where m is in the above-mentioned preferable range, the dissolving and melting temperature of the cyclic polyarylene sulfide oligomer is suitable independent of the type of Ar, and the resin has excellent ease of handling. Here, the repeating number m in the general formula can be determined by structural analysis carried out by NMR and mass spectrometry.

In addition, the cyclic polyarylene sulfide oligomer may be either a single compound having a single repeating number or a mixture of cyclic polyarylene sulfide oligomers having different repeating numbers; a mixture of cyclic polyarylene sulfide oligomers having different repeating numbers tends to have a lower melting temperature than a single compound having a single repeating number; and it is preferable to use a mixture of cyclic polyarylene sulfide

oligomers having different repeating numbers because the temperature for conversion to the below-mentioned product with high degree of polymerization can be thus made lower.

A polyarylene sulfide prepolymer used in the present invention preferably contains a cyclic polyarylene sulfide oligomer in an amount of 50 wt% or more, more preferably 70 wt% or more, still more preferably 80 wt% or more, particularly preferably 90 wt% or more.

In addition, the upper limit for the cyclic polyarylene sulfide oligomer contained in the polyarylene sulfide prepolymer is not limited to any particular value, and can be preferably, for example, in the range of 98 wt% or less.

A component other than the cyclic polyarylene sulfide oligomer in a polyarylene sulfide prepolymer to be used in the present invention is preferably a linear polyarylene sulfide oligomer. Here, a linear polyarylene sulfide oligomer is a homooligomer or a cooligomer containing, as a main constituent unit, a repeating unit of the formula -(Ar-S)-, preferably containing the repeating unit in an amount of 80 mol% or more. Examples of Ar include units represented by, for example, the below-mentioned formula (c) to formula (m), and the like, and among these, the formula (c) is particularly preferable.

[Chem. 5]

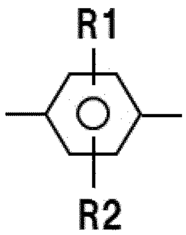

··· (c)

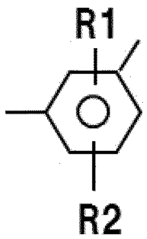

··· (d)

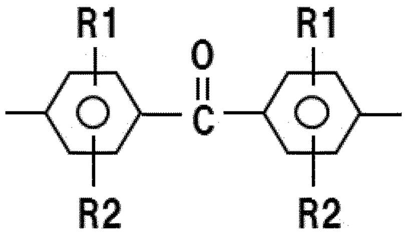

··· (e)

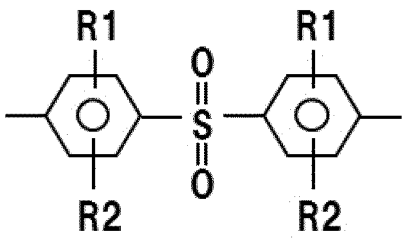

··· (f)

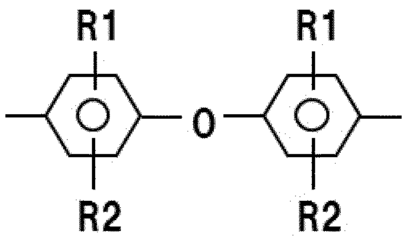

··· (g)

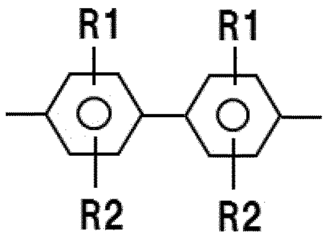

··· (h)

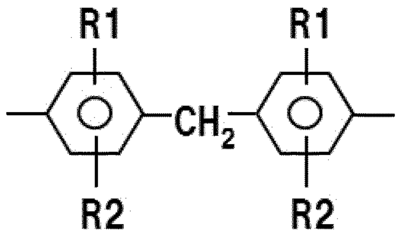

··· (i)

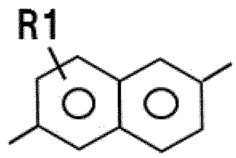

··· (j)

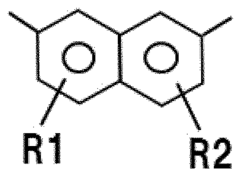

··· (k)

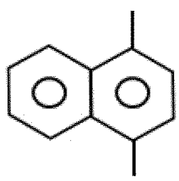

··· (l)

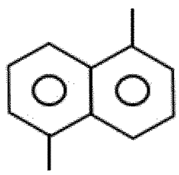

··· (m)

Provided that the linear polyarylene sulfide oligomer contains such a repeating unit as a main constituent unit, the oligomer can contain a small amount of branch unit or cross-linking unit represented by, for example, the below-mentioned formula (n) to formula (p).

[Chem. 6]

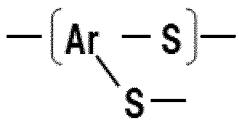
··· (n)

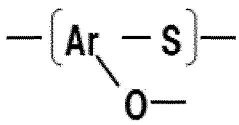
··· (o)

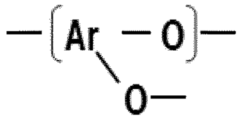
··· (p)

The copolymerization amount of such a branch unit or cross-linking unit is preferably in the range of from 0 to 1 mol% with respect to one mole of the -(Ar-S)-unit. In addition, the linear polyarylene sulfide oligomer may be any one of a random copolymer and a block copolymer which each contains the above-mentioned repeating unit, or may be a mixture thereof.

Typical examples thereof include polyphenylene sulfide oligomers, polyphenylene sulfide sulfone oligomers, polyphenylene sulfide ketone oligomers, random copolymers thereof, block copolymers thereof, mixtures thereof, and the like. Examples of particularly preferable linear polyarylene sulfide oligomers include linear polyphenylene sulfide oligomers containing, as a main constituent unit of the polymer, a p-phenylene sulfide unit in an amount of 80 mol% or more, particularly 90 mol% or more.

The weight ratio between a cyclic polyarylene sulfide oligomer and a linear polyarylene sulfide oligomer which are contained in a polyarylene sulfide prepolymer to be used in the present invention (cyclic polyarylene sulfide oligomer/linear polyarylene sulfide oligomer) is preferably 0.05 or more and 19 or less, more preferably 1.0 or more and 17 or less, still more preferably 2 or more and 15 or less, and use of such a polyarylene sulfide prepolymer makes it possible to significantly improve the residence stability.

<Linear polyarylene sulfide (linear PAS) oligomer>

A linear polyarylene sulfide oligomer in a preferable method of producing a polyarylene sulfide prepolymer to be used in the present invention is a homooligomer or a cooligomer containing, as a main constituent unit, a repeating unit of the formula -(Ar-S)-, preferably containing the repeating unit in an amount of 80 mol% or more. Examples of Ar include units represented by, for example, the above-mentioned formula (c) to formula (m), and the like, and among these, the formula (c) is particularly preferable.

Provided that the oligomer contains such a repeating unit as a main constituent unit, the oligomer can contain a small amount of branch unit or cross-linking unit represented by, for example, the above-mentioned formula (l) and formula (n) to formula (p). The copolymerization amount of such a branch unit or cross-linking unit is preferably in the range of from 0 to 1 mol% with respect to one mole of the - (Ar-S)- unit. In addition, (b) the linear polyarylene sulfide oligomer in the present invention may be any one of a random copolymer and a block copolymer which each contains the above-mentioned repeating unit, or may be a mixture thereof. Typical examples thereof include polyphenylene sulfide, polyphenylene sulfide sulfone, polyphenylene sulfide ketone, random copolymers thereof, block copolymers thereof, mixtures thereof, and the like. Examples of particularly preferable (b) linear polyarylene sulfide oligomers include: not only polyphenylene sulfide (hereinafter referred to as PPS in some cases) oligomers containing, as a main constituent unit of the polymer, a *p*-arylene sulfide unit in an amount of 80 mol% or more, particularly 90 mol% or more; but also polyphenylene sulfide sulfone and polyphenylene sulfide ketone.

A preferable upper limit of the weight average molecular weight of a cyclic polyarylene sulfide oligomer in a polyarylene sulfide prepolymer to be used in the present invention is 5,000 or less, more preferably 3,000 or less, still more preferably 2,500 or less. The lower limit of the weight average molecular weight of this cyclic polyarylene sulfide oligomer is not limited to any particular value, and is preferably 300 or more, more preferably 400 or more, still more

preferably 500 or more, from the viewpoint of pyrolysis gas. On the other hand, a preferable weight average molecular weight of the linear polyarylene sulfide oligomer is 1,000 or more and 15,000 or less, more preferably 3,000 or more and 12,000 or less, still more preferably 5,000 or more and 10,000 or less. In this regard, the weight average molecular weight can be determined using, for example, an SEC (size exclusion chromatography) device including a differential refractive index detector.

<Component contained in PAS prepolymer and other than cyclic PAS oligomer and linear PAS oligomer>

In the present invention, examples of components contained in the polyarylene sulfide and other than (a) a cyclic polyarylene sulfide oligomer and (b) a linear polyarylene sulfide oligomer include linear polyarylene sulfide oligomers.

Here, a linear polyarylene sulfide oligomer is a homooligomer or a cooligomer containing, as a main constituent unit, a repeating unit of the formula -(Ar-S)-, preferably containing the repeating unit in an amount of 80 mol% or more. Examples of Ar include units represented by, for example, the above-mentioned formula (c) to formula (m), and the like, and among these, the formula (c) is particularly preferable. Provided that the linear polyarylene sulfide oligomer contains such a repeating unit as a main constituent unit, the oligomer can contain a small amount of branch unit or cross-linking unit represented by, for example, the above-mentioned formula (I) and formula (n) to formula (p). The copolymerization amount of such a branch unit or cross-linking unit is preferably in the range of from 0 to 1 mol% with respect to one mole of the -(Ar-S)- unit. In addition, the linear polyarylene sulfide oligomer may be any one of a random copolymer and a block copolymer which each contains the above-mentioned repeating unit, or may be a mixture thereof. Typical examples thereof include polyphenylene sulfide oligomers, polyphenylene sulfide sulfone oligomers, polyphenylene sulfide ketone oligomers, random copolymers thereof, block copolymers thereof, mixtures thereof, and the like. Examples of particularly preferable linear polyarylene sulfide oligomers include linear polyphenylene sulfide oligomers containing, as a main constituent unit of the polymer, a *p*-phenylene sulfide unit in an amount of 80 mol% or more, particularly 90 mol% or more.

The amount of a component(s) contained in the polyarylene sulfide and other than a cyclic PAS and a linear PAS is preferably 50 wt% or less, more preferably 25 wt% or less, still more preferably 20 wt% or less, with respect to 100 wt% of the cyclic polyarylene sulfide. The higher the purity of the cyclic polyarylene sulfide is, the higher degree of polymerization of the polyarylene sulfide obtained after heating usually tends to be, and thus, such a purity is preferable from the viewpoint of enhancing the mechanical properties.

The weight average molecular weight of the linear polyarylene sulfide oligomer contained in the cyclic polyarylene sulfide is preferably 300 or more and 5,000 or less, more preferably 300 or more and 3,000 or less, still more preferably 300 or more and 2,000 or less.

<Method of producing polyarylene sulfide prepolymer>

Examples of methods of producing the above-mentioned polyarylene sulfide prepolymer include the following methods.

(1) a method in which a mixture containing at least a polyhalogenated aromatic compound, a sulfidizing agent, and an organic polar solvent is heated to polymerize a polyarylene sulfide resin; in which a mixture is prepared, the mixture containing: a granular polyarylene sulfide (hereinafter referred to as PAS for short) resin to be separated with a 80-mesh sieve (having an opening of 0.125 mm); a PAS component(s) (referred to as a polyarylene sulfide oligomer(s)) which is/are a PPS component(s) generated by the polymerization and other than the granular PAS resin; an organic polar solvent; water; and a halogenated alkali metal salt; and in which the polyarylene sulfide oligomer contained in the resulting mixture is collected by separation, and subjected to a purification operation to obtain (B).

(2) a method in which a reaction mixture containing at least sulfidizing agent (sulfur component), a dihalogenated aromatic compound (arylene component), and an organic polar solvent is heated and thus allowed to react to obtain a product.

Examples of sulfidizing agents include sulfides of alkali metal, such as sodium sulfide. Examples of dihalogenated aromatic compounds include dichlorobenzene and the like. Examples of organic polar solvents include N-methylpyrrolidone and the like.

The heating temperature is preferably higher than the reflux temperature of the reaction mixture under ordinary pressure from the viewpoint of producing a cyclic polyarylene sulfide efficiently. Specifically, the reaction temperature is preferably 180°C to 320°C, more preferably 225°C to 300°C. In addition, the mode of reaction may be any one of a single-stage reaction carried out at a constant temperature, a multistage reaction carried out with the temperature increased stepwise, and a reaction carried out with the temperature continuously changed.

The reaction time is preferably 0.1 hours or more, more preferably 0.5 hours or more. On the other hand, the reaction time is not limited to any particular upper limit, the reaction progresses sufficiently even within 40 hours, and the time is preferably within six hours.

In addition, the pressure during reaction is not limited to any particular value, and is preferably 0.05 MPa or more, more preferably 0.3 MPa or more, in terms of gauge pressure. At the preferable reaction temperature, the self-pressure of the reaction mixture causes a pressure increase, and thus, the pressure at such a reaction temperature is preferably 0.25 MPa or more, more preferably 0.3 MPa or more, in terms of gauge pressure. On the other hand, the pressure during reaction is preferably 10 MPa or less, more preferably 5 MPa or less. To cause the pressure during reaction to be within the preferable range, the inside of the reaction system is pressurized with inert gas at any stage, for example, before starting the reaction or during the reaction, preferably before starting the reaction, in a preferable method. In this regard, the gauge pressure is a relative pressure with respect to the atmospheric pressure, and has the same meaning as a pressure difference obtained by subtracting the atmospheric pressure from an absolute pressure. In the present invention, a metallic organocarboxylate may be present over the whole course in which the reaction mixture is allowed to react, or a metallic organocarboxylate may be present in only a part of the course.

<Conversion of polyarylene sulfide prepolymer to product with the high degree of polymerization>

A high polymerization degree product can be produced by converting the polyarylene sulfide prepolymer by heating. This heating temperature is preferably equal to or greater than a temperature at which the polyarylene sulfide prepolymer is dissolved and melted, and, provided that the temperature condition is such, the heating temperature is not limited to any particular value. A heating temperature lower limit which is a preferable temperature as above-mentioned makes it possible to obtain a PAS in a short time. In this regard, a temperature at which the polyarylene sulfide prepolymer is dissolved and melted varies depending on the composition and molecular weight of the polyarylene sulfide prepolymer and on the environment during heating, and thus, cannot be uniquely defined, but, for example, a dissolving and melting temperature can be known by analyzing the polyarylene sulfide prepolymer by a differential scanning calorimeter. A specific heating temperature is, for example, preferably 180°C to 400°C, more preferably 200°C to 380°C, still more preferably 250°C to 360°C. The above-mentioned preferable temperature range makes it less likely to cause an undesirable side reaction typified by a cross-linking reaction or a decomposition reaction, and does not decrease the characteristics of the resulting PAS.

The time for which the heating is carried out varies depending on various characteristics such as the content ratio, m number, and molecular weight of a cyclic polyarylene sulfide in a polyarylene sulfide prepolymer to be used, and on the conditions such as the heating temperature, and thus, cannot be uniquely defined, and a specific heating time is, for example, preferably 0.05 to 100 hours, more preferably 0.1 to 20 hours, still more preferably 0.1 to 10 hours. The above-mentioned preferable heating time range allows the polyarylene sulfide prepolymer to be converted to a PAS sufficiently, and on the other hand, does not make it possible that an adverse influence of an undesirable side reaction on the characteristics of the resulting PAS is actualized.

The polyarylene sulfide prepolymer is converted to a product with a high degree of polymerization by heating usually in the absence of a solvent, but can also be converted in the presence of a solvent. Preferable examples of solvents include: nitrogen-containing polar solvents such as N-methyl-2-pyrrolidone, dimethylformamide, and dimethyl acetamide; sulfoxide/sulfone-based solvents such as dimethyl sulfoxide and dimethyl sulfone; ketone-based solvents such as acetone, methylethyl ketone, diethyl ketone, and acetophenone; ether-based solvents such as dimethyl ether, dipropyl ether, and tetrahydrofuran; halogen-based solvents such as chloroform, methylene chloride, trichloroethylene, ethylene dichloride, dichloroethane, tetrachloroethane, and chlorobenzene; alcohol/phenol-based solvents such as methanol, ethanol, propanol, butanol, pentanol, ethylene glycol, propylene glycol, phenol, cresol, and polyethylene glycol; aromatic hydrocarbon-based solvents such as benzene, toluene, and xylene; and the like. In addition, an inorganic compound such as carbon dioxide, nitrogen, or water can be used as a solvent in a supercritical fluid state. These solvents can be singly or in mixture of two or more kinds thereof.

The above-mentioned conversion of the polyarylene sulfide prepolymer to a product with a high degree of polymerization by heating can obviously be carried out usually by a method using a polymerization reaction device, and can be carried out without particular limitation provided that the conversion is carried out using a device including a heating mechanism. For example, the conversion may also be carried out in a mold for producing a molded article, or carried out using an extruder or a melt kneading machine, and a known method such as a batch method or a continuous method can be adopted. The polyarylene sulfide prepolymer is converted to a product with a high degree of polymerization by heating preferably in a non-oxidizing atmosphere and also preferably under reduced pressure conditions. In cases where the reduced pressure conditions are used, it is preferable that the inside of the reaction system is once put under a non-oxidizing atmosphere before being put under reduced pressure conditions. This tends to make it possible that an undesirable side reaction such as a cross-linking reaction or a decomposition reaction is inhibited from occurring, for example, between polyarylene sulfide prepolymers, between PASs generated by heating, and between PASs and

polyarylene sulfide prepolymers. Here, a non-oxidizing atmosphere refers to an atmosphere in which the gas phase in contact with the polyarylene sulfide prepolymer has an oxygen concentration of 5 vol% or less, preferably 2 vol% or less, still more preferably substantially no oxygen; that is, the atmosphere refers to an inert gas atmosphere such as of nitrogen, helium, or argon; and among these, a nitrogen atmosphere in particular is preferable from the viewpoint of economical efficiency and ease of handling. In addition, reduced pressure conditions refer to the conditions in a system in which a reaction takes place and in which the pressure is lower than the atmospheric pressure, and the upper limit is preferably 50 kPa or less, more preferably 20 kPa or less, still more preferably 10 kPa or less. The lower limit is, for example, 0.1 kPa or more. The reduced pressure conditions equal to or lower than the preferable upper limit tend to make it less likely that an undesirable side reaction such as a cross-linking reaction occurs, and on the other hand, the conditions equal to or greater than the preferable lower limit tend to make it less likely, independent of the reaction temperature, that a cyclic polyarylene sulfide contained in the polyarylene sulfide prepolymer and having a low molecular weight is volatilized.

The resin composition used in the present invention is usually obtained by melt kneading. Representative examples of methods using a melt kneading machine include: a method in which a resin composition fed into a usually known melt kneading machine such as a single-screw or twin-screw extruder, a banbury mixer, a kneader, or a mixing roll is kneaded at a processing temperature which is the melting peak temperature of the resin composition + 5 to 100°C; and the like. In this case, mixing the raw materials is not limited to any particular order, and any method may be used, for example: a method in which all raw materials are blended and then melt-kneaded by the above-mentioned method; a method in which part of the raw materials are blended and then melt-kneaded by the above-mentioned method, and further, the remaining raw materials are blended and melt-kneaded; or a method in which part of the raw materials are blended and melt-kneaded using a single-screw or twin-screw extruder, and during the same time, the remaining raw materials are added and mixed using a side feeder. In addition, an additive component to be added in a small amount can obviously be added to the other components to serve for molding after the other components are kneaded and pelletized by the above-mentioned method or the like and before the resulting mixture is molded.

In addition, a composition according to the present invention makes it possible to adopt a method in which the blend in a solid state is compressed and hardened into the form of tablets, which serve for molding such as injection molding.

Examples of another production method of producing a resin composition according to the present invention include a method in which a thermoplastic resin composed of the (A) and the (B) and (C) an anionic polymerization initiator having a sulfide group (hereinafter simply referred to as "(C) an anionic polymerization initiator" in some cases) are dry-blended and heated in the temperature range of from 240°C to 450°C using a device including a heating mechanism for 0.01 hours to ten hours, whereby the resulting mixture is converted to a polyarylene sulfide having a weight average molecular weight of 15,000 or more and 60,000 or less in cases where the (B) component is a cyclic polyarylene sulfide, and this method makes it possible to obtain a resin composition according to the present invention having the above-mentioned characteristics.

In a production method using (C) an anionic polymerization initiator, (A) the thermoplastic resin having a glass-transition temperature of 100°C or more preferably has an electron-withdrawing group.

An electron-withdrawing group refers to a substituent which attenuates the electron density of an atom adjacent to the electron-withdrawing group, and the anion of (C) the anionic polymerization initiator is added to the adjacent atom the electron density of which has been attenuated.

Examples of electron-withdrawing groups include an aldehyde group, ketone group, imide group, sulfonyl group, ether group, sulfide group, nitro group, carboxyl group, cyano group, phenyl group, halogen group, ester group, phosphono group, and the like. Two or more of these may be contained.

(C) the anionic polymerization initiator is preferably an ionic compound represented by the following general formula.

[Chem. 7] $$\mathbf{(R')_m\text{-}R\text{-}(S^-M^+)_n}$$

Here, R' represents a hydrogen atom, $C_{1-12}$ alkyl group, $C_{1-12}$ alkoxy group, $C_{6-24}$ arylene group, primary, secondary, or tertiary amino group, nitro group, carboxyl group and an ester thereof, cyano group, sulfonic group, or halogen group; R represents an organic group; $S^-$ represents an anion species of sulfur; $M^+$ represents a monovalent metal ion or divalent monohalide ion; m is an integer of 0 to 15; and n is an integer of 1 to 15.

Examples of organic groups in the above-mentioned general formula include an arylene group, naphthalene ring, pyridine ring, pyrimidine ring, imidazole ring, benzimidazole ring, benzoxazole ring, and benzothiazol ring; among others, a phenylene, biphenylene, naphthalene ring, benzimidazole ring, benzoxazole ring, benzothiazol ring, benzotriazole ring, phthalimide ring, and the like, which have excellent heat resistance at high temperature, are preferable; and a phenylene, benzimidazole ring, benzoxazole ring, and benzothiazol ring are still more preferable.

In the present invention, preferable examples of (C) the anionic polymerization initiator include alkali metal salts

such as lithium salt, sodium salt, and potassium salt of the below-mentioned compounds. Examples of compounds include alkali metal salts such as lithium salt, sodium salt, and potassium salt of thiophenol, 1,2-benzenedithiol, 1,3-benzenedithiol, 1,4-benzenedithiol, 2-thiocresol, 3-thiocresol, 4-thiocresol, 2-aminothiophenol, 3-aminothiophenol, 4-aminothiophenol, 2-methoxybenzenethiol, 3-methoxybenzenethiol, 4-methoxybenzenethiol, 4-nitrothiophenol, 4-tert-butylthiophenol, 3-dimethylaminothiophenol, 4-dimethylaminothiophenol, 2-chlorothiophenol, 3-chlorothiophenol, 4-chlorothiophenol, 2-bromothiophenol, 3-bromothiophenol, 4-bromothiophenol, 4-tert-butyl-1,2-benzenedithiol, mercaptoimidazole, mercaptobenzimidazole, mercaptobenzoxazole, mercaptobenzothiazol, mercaptopyrimidine, or the like. Alkali metal salts of thiophenol, mercaptobenzimidazole, mercaptobenzoxazole, and mercaptobenzothiazol are particularly preferable.

A thermoplastic resin composition obtained by blending (C) an anionic polymerization initiator with a polyarylene sulfide prepolymer composed of a mixture of (A) a thermoplastic resin having a glass-transition temperature of 100°C or more, (B) a cyclic polyarylene sulfide having a glass-transition temperature of less than 100°C, and a linear polyarylene sulfide has excellent heat resistance, mechanical properties, and formativeness. The reason why such an effect is achieved is not clear, but is inferred as below-mentioned.

First, the anion of (C) the anionic polymerization initiator having a sulfide group is added to the atom adjacent to the electron-withdrawing group of (A) the thermoplastic resin having a glass-transition temperature of 100°C or more, and thus, a thermoplastic resin having a sulfide group is partially generated. This thermoplastic resin having a sulfide group undergoes sulfide exchange reaction with the sulfide group of the cyclic polyarylene sulfide in (B) the polyarylene sulfide polymer, with the result that the cyclic polyarylene sulfide and the (A) component react via the anionic polymerization initiator, and the resulting polyarylene sulfide and the (A) component have higher compatibility and afford excellent heat resistance and mechanical properties.

In addition, the cyclic polyarylene sulfide in (B) the polyarylene sulfide prepolymer and the (A) component react via the anionic polymerization initiator, thereby making it possible to suitably control the ring-opening polymerization and ring-expansion reaction of the cyclic polyarylene sulfide. This makes it possible to inhibit a decrease in the compatibility between the resulting polyarylene sulfide and (A) the thermoplastic resin having a glass-transition temperature of 100°C or more and to obtain a thermoplastic resin composition having a single glass-transition temperature, and thus, the excellent heat resistance can be maintained even after the melt residence.

From the viewpoint of heat resistance and mechanical properties, 0.01 parts by weight or more and 10 parts by weight or less of (C) the anionic polymerization initiator is preferable with respect to 100 parts by weight of (A) the thermoplastic resin having a glass-transition temperature of 100°C or more. The amount is more preferably 0.05 parts by weight or more and 5 parts by weight or less, still more preferably 0.1 parts by weight or more and 1 part by weight or less. To the extent that the effects of the present invention are not impaired, an inorganic filler can be used for blending, although such an inorganic filler is not a component essential to a resin composition according to the present invention. Specific examples of inorganic fillers to be used include: fibrous fillers such as glass fiber, carbon fiber, carbon nanotube, carbon nanohorn, potassium titanate whisker, zinc oxide whisker, calcium carbonate whisker, wollastonite whisker, aluminium borate whisker, aramid fiber, alumina fiber, silicon carbide fiber, ceramic fiber, asbestos fiber, gypsum fiber, and metallic fiber; silicates such as fullerene, talc, wollastonite, zeolite, sericite, mica, kaolin, clay, pyrophyllite, silica, bentonite, asbestos, and alumina silicate; metal compounds such as silicon oxide, magnesium oxide, alumina, zirconium oxide, titanium oxide, and iron oxide; carbonate salts such as calcium carbonate, magnesium carbonate, and dolomite; sulfate salts such as calcium sulfate and barium sulfate; hydroxides such as calcium hydroxide, magnesium hydroxide, and aluminium hydroxide; and non-fibrous fillers such as glass beads, glass flake, glass powder, ceramic beads, boron nitride, silicon carbide, carbon black, silica, and graphite. Among these, glass fiber, silica, and calcium carbonate are preferable, and furthermore, calcium carbonate and silica are particularly preferable from the viewpoint of the effects of an anticorrosion material and a lubricant. In addition, these inorganic fillers may be hollow, and furthermore, can be used in combination of two or more kinds thereof. In addition, these inorganic fillers may be used after being preliminarily treated with a coupling agent such as an isocyanate-based compound, organic silane-based compound, organic titanate-based compound, organic borane-based compound, or epoxy compound. Among these, calcium carbonate, silica, and carbon black are preferable from the viewpoint of the effects of an anticorrosion material, a lubricant, and imparted electrical conductivity.

The preferably selected range of the blended amount of the inorganic filler is 100 parts by weight or less with respect to a total of 100 parts by weight of a resin composition according to the present invention, the range of 80 parts by weight or less is more preferable, the range of 60 parts by weight or less is still more preferable, and the range of 40 parts by weight or less is particularly preferable. Without particular limitation to the lower limit, 0.0001 parts by weight or more is preferable. The inorganic filler blended in an amount in the above-mentioned preferable range does not cause the melt fluidity to be impaired. The blended amount of the inorganic filler can be suitably changed depending on the application, taking into consideration a balance between fluidity and stiffness.

In addition, the below-mentioned compound can be added for a modification purpose. Examples of the compounds that can be blended include: plasticizers such as polyalkylene oxide oligomer-based compounds, thioether-based compounds, ester-based compounds, and organic phosphorus-based compounds; crystal nucleating agents such as organic phosphorus compounds and polyetheretherketones; metallic soaps such as montanoic acid waxes, lithium stearate, and aluminium stearate; release agents such as ethylenediamine/stearic acid/sebacic acid polycondensates and silicone-based compounds; color-protection agents such as hypophosphite; phenol-based antioxidants such as (3,9-bis[2-(3-(3-t-butyl-4-hydroxy-5-methylphenyl)propionyloxy)-1,1-dimethylethyl]-2,4,8,10-tetraoxaspiro[5,5]undecane); phosphorus-based antioxidants such as (bis(2,4-di-cumylphenyl)pentaerythritol-di-phosphite); and other usual additives such as water, lubricants, ultraviolet absorbers, coloring agents, and foaming agents. The addition amount of the above-mentioned compound is preferably 10 wt% or less, more preferably 1 wt% or less. The addition amount of the above-mentioned compound in this preferable range does not cause the original characteristics of the resin to be impaired.

A fiber reinforced resin base material according to an embodiment of the present invention can be obtained by impregnating a continuous reinforcing fiber with a thermoplastic resin (a first aspect). Alternatively, such a fiber reinforced resin base material can be obtained by impregnating, with a thermoplastic resin, a reinforcing fiber material having a discontinuous fiber reinforcing fiber(s) dispersed therein (a second aspect).

Examples of methods of impregnating a continuous reinforcing fiber with a thermoplastic resin in the first aspect include: a film method in which a film-shaped thermoplastic resin is melted and pressed to impregnate the reinforcing fiber bundle with the thermoplastic resin; a commingle method in which a fibrous thermoplastic resin and a reinforcing fiber bundle are mix-spun, and then the fibrous thermoplastic resin is melted and pressed to impregnate the reinforcing fiber bundle with the thermoplastic resin; a powder method in which a powdery thermoplastic resin is dispersed in the gaps of the fibers in a reinforcing fiber bundle, and then, the powdery thermoplastic resin is melted and pressed to impregnate the reinforcing fiber bundle with the thermoplastic resin; and a pultrusion method in which a reinforcing fiber bundle is immersed in a molten thermoplastic resin and pressed to impregnate the reinforcing fiber bundle with a thermoplastic resin. The pultrusion method makes it possible to produce many types of fiber reinforced resin base materials having various thicknesses, fiber volume fractions, and the like, and thus, is preferable.

A fiber reinforced resin base material according to the first aspect of the present invention preferably has a thickness of 0.1 to 10 mm. The thickness of 0.1 mm or more makes it possible to enhance the strength of a molded article obtained using a fiber reinforced polyamide resin base material. The thickness is more preferably 0.2 mm or more. On the other hand, the thickness of 1.5 mm or less makes it easier to impregnate a reinforcing fiber with a thermoplastic resin. The thickness is more preferably 1 mm or less, still more preferably 0.7 mm or less, still more preferably 0.6 mm or less.

In addition, the volume fraction of a fiber reinforced resin base material in the first aspect of the present invention is preferably 20 to 70 vol%. In other words, the whole fiber reinforced resin base material (100 vol%) preferably contains 20 to 70 vol% (20 vol% or more and 70 vol% or less) of the reinforcing fiber. Containing 20 vol% or more of the reinforcing fiber makes it possible to further enhance the strength of a molded article obtained using the fiber reinforced resin base material. The volume fraction is more preferably 30 vol% or more, still more preferably 40 vol% or more. On the other hand, containing 70 vol% or less of the reinforcing fiber makes it easier to impregnate the reinforcing fiber with the thermoplastic resin. The volume fraction is more preferably 60 vol% or less, still more preferably 55 vol% or less. The volume fraction can be adjusted within a desired range by adjusting the addition amounts of the reinforcing fiber and the thermoplastic resin.

The volume fraction (Vf) of the reinforcing fiber in the fiber reinforced resin base material can be calculated in accordance with the following equation after the mass W0 of the fiber reinforced resin base material is measured. Then the fiber reinforced resin base material is heated at 500°C in the air for 30 minutes to burn the thermoplastic resin component away, followed by measuring the mass W1 of the remaining reinforcing fiber.

$$Vf\,(vol\%) = (W1 / \rho f) / \{W1 / \rho f + (W0 - W1) / \rho 1\} \times 100$$

pf: density (g/cm$^3$) of reinforcing fiber
pr: density (g/cm$^3$) of thermoplastic resin

In addition, a fiber reinforced resin base material according to an embodiment of the present invention makes it possible to select desired impregnation properties in accordance with the usage and the purpose. Examples thereof include prepregs having higher impregnation properties, semi-impregnated semipregs, fabrics having lower impregnation properties, and the like. In general, a molding material having higher impregnation properties makes it possible to afford a molded article having better mechanical characteristics even if molded in a shorter time, and thus, is preferable.

Examples of methods of impregnating a reinforcing fiber material having a discontinuous fiber(s) dispersed therein with a thermoplastic resin in the second aspect of the present invention include: a method in which a reinforcing fiber material is impregnated with a thermoplastic resin fed from an extruder; a method in which a powdery thermoplastic

resin is dispersed and melted in the fiber layer of a reinforcing fiber material; in a method in which a thermoplastic resin is formed into a film and laminated with a reinforcing fiber material; a method in which a thermoplastic resin is dissolved in a solvent, a reinforcing fiber material is impregnated with the solution, and then, the solvent is volatilized; a method in which a thermoplastic resin is formed into a fiber, which is formed into a yarn mixture with a discontinuous fiber; a method in which a reinforcing fiber material is impregnated with a precursor of a thermoplastic resin, and then, the precursor is polymerized into a thermoplastic resin; and a method in which a meltblown non-woven fabric is used for lamination; and the like. Although any one of these methods may be used, the method in which a reinforcing fiber material is impregnated with a thermoplastic resin fed from an extruder has an advantage in that the thermoplastic resin does not need to be secondarily processed; the method in which a powder thermoplastic resin is dispersed and melted in the fiber layer of a reinforcing fiber material has an advantage in that the impregnation is easier; and the method in which a thermoplastic resin is formed into a film and laminated with a reinforcing fiber material has an advantage in that a product having a comparatively better quality is obtained.

A fiber reinforced resin base material according to the second aspect of the present invention preferably has a thickness of 0.1 to 10 mm. The thickness of 0.1 mm or more makes it possible to enhance the strength of a molded article obtained using a fiber reinforced resin base material. The length is more preferably 1 mm or more. On the other hand, the thickness of 10 mm or less makes it easier to impregnate a reinforcing fiber material with a thermoplastic resin. The thickness is more preferably 7 mm or less, still more preferably 5 mm or less.

In addition, the volume fraction of a fiber reinforced resin base material in the second aspect of the present invention is preferably 20 to 70 vol%. In other words, the whole fiber reinforced resin base material (100 vol%) preferably contains 20 vol% or more and 70 vol% or less of the discontinuous fiber. Containing 20 vol% or more of the discontinuous fiber makes it possible to further enhance the strength of a molded article obtained using the fiber reinforced resin base material. The volume fraction is more preferably 30 vol% or more. On the other hand, containing 70 vol% or less of the discontinuous fiber makes it easier to impregnate the discontinuous fiber with the thermoplastic resin. The volume fraction is more preferably 60 vol% or less, still more preferably 50 vol% or less. The volume fraction Vf can be calculated in accordance with the above-mentioned equation.

In addition, a fiber reinforced resin base material in the second aspect of the present invention makes it possible to select desired impregnation properties in accordance with the usage and the purpose. In general, a molding material having higher impregnation properties makes it possible to afford a molded article having better mechanical characteristics even if molded in a shorter time, and thus, is preferable.

In production of a fiber reinforced resin base material in the second aspect of the present invention, a method of adjusting the base material to a desired thickness and volume fraction is, for example, a method in which the material is heated and pressed using a press machine. Such a press machine is not limited to any particular machine provided that the machine makes it possible to achieve a temperature and pressure necessary for the impregnation of a thermoplastic resin, and examples of press machines that can be used include: common press machines having a planar platen which moves up and down; and what is called a double-belt press machine having a mechanism which causes a pair of endless steel belts to run.

A molded article is obtained by laminating one or more of the fiber reinforced resin base materials having an arbitrary structure in the first and second embodiments of the present invention and then molding the resulting product with heat and/or pressure applied thereto if necessary.

Examples of methods of applying heat and/or pressure include: a press molding method in which a fiber reinforced thermoplastic resin having an arbitrary laminated structure is placed in a mold or on a press plate and then pressed with the mold or press plate closed; an autoclave molding method in which a molding material having an arbitrary laminated structure is put in an autoclave, pressed, and heated; a bucking molding method in which a molding material having an arbitrary laminated structure is wrapped in a film or the like and heated in an oven with the inside pressurized under a pressure reduced to the atmospheric pressure; a wrapping tape method in which a tape is wound, under tension, around a fiber reinforced thermoplastic resin having an arbitrary laminated structure, and the resulting resin is heated in an oven; an internal pressure molding method in which a fiber reinforced end-modified polyamide resin having an arbitrary laminated structure is placed in a mold and pressed with gas, liquid, or the like poured in the core placed in the same mold; and the like. In particular, a molding method in which a mold is used for pressing is preferably used because the resulting molded article has fewer voids, and also has excellent appearance quality.

Examples of press molding methods that can be adopted include: a hot-pressing method in which a fiber reinforced resin base material preliminarily placed in a mold is pressed and heated when the mold is closed, and then, the fiber reinforced resin base material is cooled by cooling the mold which is still closed, so that a molded article is obtained; and a stamping molding method in which a fiber reinforced resin base material is preliminarily heated to a temperature equal to or greater than the melting temperature of a thermoplastic resin using a heating device such as a far-infrared heater, a heating plate, a high temperature oven, or a dielectric heater, the thermoplastic resin in a molten and softened state is placed on a mold corresponding to the underside of the aforementioned mold, and then the former mold is closed, followed by pressing and cooling. The press molding method is not limited to any particular method, and

is preferably a stamping molding method from the viewpoint of speeding up the mold cycle and enhancing the productivity. A fiber reinforced resin base material and molded article in the first and second embodiments of the present invention make it possible to carry out integral molding such as insert molding or outsert molding and to carry out integration using an adhering technique or adhesive agent having excellent productivity, for example, using heating-based corrective treatment, heat welding, vibration welding, or ultrasonic welding, and thus, make it possible to obtain a composite.

A preferable composite molded article is one in which a fiber reinforced resin base material in the first or second embodiment of the present invention and a molded article containing a thermoplastic resin are at least partially joined.

A molded article (a base material for molding, and a molded article) which contains a thermoplastic resin and is to be integrated with a fiber reinforced resin base material in the first and second embodiments of the present invention is not limited to any particular article, and examples of such articles include resin materials and molded articles thereof, metal materials and molded articles thereof, and inorganic materials and molded articles thereof, and the like. Among these, resin materials and molded articles thereof are preferable from the viewpoint of the strength of adhesion with a fiber reinforced thermoplastic resin in the present invention.

A matrix resin of a molding material and a molded article which are to be integrated with a fiber reinforced resin base material in the first and second embodiments according to the present invention may be the same type of resin as or a different type of resin from the fiber reinforced resin base material and a molded article thereof. The same type of resin is preferable in order to further enhance the strength of adhesion. In cases where a different type of resin is used, the resin is more suitable with a resin layer provided on the interface of the resin.

EXAMPLES

Below, the present invention will be more specifically described with reference with Examples, and the present invention is not limited to the description of these Examples. The evaluation of properties in each of Examples and Comparative Examples was carried out in accordance with the below-mentioned methods.

[Volume fraction (Vf)]

After the mass W0 of a fiber reinforced resin base material obtained in each of Examples and Comparative Examples was measured, the fiber reinforced resin base material was heated at 550°C in the air for 240 minutes to burn the resin component away, and the mass W1 of the remaining reinforcing fiber was measured, followed by calculating the volume fraction (Vf) of the fiber reinforced resin base material in accordance with the following equation.

$$Vf\,(vol\%) = (W1 / \rho f) / \{W1 / \rho f + (W0 - W1) / \rho 1\} \times 100$$

pf: density (g/cm$^3$) of reinforcing fiber
pr: density (g/cm$^3$) of resin composition

[Molecular weight of polyarylene sulfide prepolymer]

The molecular weight of the polyarylene sulfide prepolymer was calculated in terms of polystyrene by gel permeation chromatography (GPC), which is one kind of size exclusion chromatography (SEC). The measurement conditions of GPC are as below-mentioned.

- Device: SSC-7100, manufactured by Senshu Scientific Co.
- Column: GPC3506, manufactured by Senshu Scientific Co.
- Eluant: 1-chloronaphthalene
- Detector: differential refractive index detector
- Column temperature: 210°C
- Pre-thermostatic chamber temperature: 250°C
- Pump thermostatic chamber temperature: 50°C
- Detector temperature: 210°C
- Flow rate: 1.0 mL/min.
- Sample injection amount: 300 μL (sample concentration: approximately 0.2 wt%)

<Measurement of amount of cyclic polyarylene sulfide>

The amount of each of (a) a cyclic polyarylene sulfide, (b) a linear polyarylene sulfide, and a cyclic polyarylene

sulfide in the polyarylene sulfide prepolymer was calculated by high performance liquid chromatography (HPLC) using the following approach.

Device: LC-10Avp Series, manufactured by Shimadzu Corporation
Column: Mightysil RP-18 GP150-4.6 (5 μm)
Detector: photodiode array detector (UV = 270 nm)

[Melting point]

Using a differential scanning calorimeter (DSC Q20) manufactured by TA Instruments, Inc., a resin composition obtained in each of Examples and Comparative Examples was weighed out in an amount of 5 to 7 mg, and heated under a nitrogen atmosphere from 20°C to 250°C at a heating rate of 20°C/min. The top of the endothermic peak appearing during the heating was regarded as Tm (melting point).

[Polymer heat resistance (DMA method)]

Resin composition pellets obtained in each of Examples and Comparative Examples were formed into a press film, 8 mm wide × 40 mm long × 0.1 mm thick, at a processing temperature of the melting point + 60°C, and a dynamic viscoelasticity measurement device (DMS6100) manufactured by Seiko Instruments Inc. was used to measure the storage modulus and the loss modulus under the below-mentioned measurement conditions, followed by determining the loss tangent tan δ (the loss modulus/the storage modulus). Then, a graph of the measurement temperature and the loss tangent was prepared, and a temperature exhibiting a peak in this graph was calculated as a glass-transition temperature. Here, it can be said that the fewer the number of peaks, and the higher the glass-transition temperature, the better the polymer heat resistance.

- Measurement mode: bending mode
- Temperature conditions: the temperature was held at 50°C for two minutes in the first step, and raised from 50°C to 270°C in the second step.
- Heating rate: 2°C/min.
- Measurement frequency: 1 Hz
- Minimum tension: 200 mN
- Strain amplitude: 10 μm
- Tension gain: 1.5
- Force amplitude initial value: 2,000 mN

[Polymer thermal stability evaluation (DMA method)]

A press film test piece used for the above-mentioned polymer heat resistance evaluation was heated at 400°C for one hour, followed by preparing a graph of the measurement temperature and the loss tangent on the basis of the same measurement device and measurement conditions as in the polymer heat resistance evaluation, and a temperature exhibiting a peak in this graph was calculated as a glass-transition temperature. Here, it can be said that the fewer the number of peaks, and the higher the glass-transition temperature, the better the polymer thermal stability.

[Fiber reinforced resin base material/heat resistance (DMA method)]

Two sheets (each 0.09 mm thick and 50 mm wide) of fiber reinforced resin base material obtained in each of Examples and Comparative Example were laminated and pressed at a processing temperature of the melting point + 60°C, and cut to 8 mm wide × 40 mm long × 0.18 mm thick, to obtain such a measurement test piece. This obtained test piece was used to measure the storage modulus at measurement temperatures of 110°C and 120°C under the below-mentioned measurement conditions using a dynamic viscoelasticity measurement device (DMS6100) manufactured by Seiko Instruments Inc.. In this regard, it can be said that the larger this value, the better the heat resistance of the fiber reinforced resin base material.

[Melt viscosity]

A resin composition obtained in each of Examples and Comparative Examples was dried in a vacuum drier at 100°C for 12 hours or more. A capillary flowmeter (Capilo Graph 1C manufactured by Toyo Seiki Seisaku-sho, Ltd.) was used as a melt viscosity measurement device to measure the melt viscosity (melt viscosity before residence) with an

orifice having a diameter of 0.5 mm and a length of 5 mm under the conditions of a melting point + 60°C and a shear rate of 9,728 $sec^{-1}$. In order to melt the resin composition, however, the measurement was made after the composition was placed under residence for five minutes. A smaller value of this melt viscosity indicates that the composition has a higher fluidity.

[Impregnation properties and thermal stability]

The cross-section in the thick direction of a fiber reinforced resin base material obtained in each of Examples and Comparative Examples was observed as below-mentioned. A sample of a fiber reinforced resin base material embedded in an epoxy resin was provided and polished so that the cross-section in the thick direction of the fiber reinforced resin base material could be observed clearly. The polished sample was photographed at a magnification ratio of 400× using an ultra-deep color 3D shape measurement microscope, VHX-9500 (controller unit)/VHZ-100R (measurement unit) (manufactured by Keyence Corporation). The photographing range was set so as to cover the thickness of the fiber reinforced resin base material × 500 μm in width. In the photograph image, the area of the site occupied by the resin and the area of the site(s) formed into the air gap(s) (void(s)) were determined, and the impregnation ratio was calculated in accordance with the following equation.

$$\text{Impregnation ratio (\%)} = 100 \times \text{(the total area of the site occupied by the resin)} / \{\text{(the total area of the site occupied by the resin)} + \text{(the total area of the site(s) formed into the air gap(s))}\}$$

In cases where the impregnation properties and the thermal stability were high, the void(s) was/were decreased; in cases where at least one of the impregnation properties and the thermal stability was low, the void(s) was/were increased; and thus, the impregnation properties and thermal stability of the fiber reinforced resin base material were evaluated in the below-mentioned two steps using this impregnation ratio as the criteria of judgment, and a good result was regarded acceptable. A fiber reinforced resin base material in the first aspect was produced at processing temperatures of the melting point + 60°C and 100°C. A fiber reinforced resin base material in the second aspect was produced at processing temperatures of the melting point + 60°C and 100°C.

Good: the impregnation ratio is 98% or more.
Not good: the impregnation ratio is less than 98%.

[Surface quality]

The surface quality of a fiber reinforced resin base material obtained in each of Examples and Comparative Examples was visually observed. The surface quality was evaluated in the following two steps, and a good result was regarded as acceptable.

Good: the surface is free of any break, discoloration of the matrix resin, and exposure of the reinforcing fiber.
Not good: the surface exhibits any break, discoloration of the matrix resin, and exposure of the reinforcing fiber.

A fiber reinforced resin base material in the first aspect was produced at processing temperatures of the melting point + 60°C and 100°C. A fiber reinforced resin base material in the second aspect was produced at processing temperatures of the melting point + 60°C and 100°C.

[Raw material]

The below-mentioned raw materials were used in Examples and Comparative Examples.

<Reference Example 1> (A) Thermoplastic resin having a glass-transition temperature of 100°C or more

(A-1): polyetheretherketone resin (product name: PEEK90G, having a glass-transition temperature of 143°C), manufactured by Victrex plc

(A-2): polyetheretherketone resin (product name: PEEK150PF, having a glass-transition temperature of 145°C), manufactured by Victrex plc

(A-3): polyetherketoneketone resin (product name: PEKK7002, having a glass-transition temperature of 163°C), manufactured by Arkema S.A.

(A-4): polyetherimide resin (product name: UTM1010, having a glass-transition temperature of 220°C, manufactured by Sabic)

<Reference Example 2> (B') Thermoplastic resin having a glass-transition temperature of less than 100°C

<Production of polyarylene sulfide (B'-1)>

Into a 70-L-volume autoclave with an agitator and a bottom stop valve, 8.27 kg (70.00 mol) of 47.5% sodium hydrosulfide, 2.91 kg (69.80 mol) of 96% sodium hydroxide, 11.45 kg (115.50 mol) of N-methyl-2-pyrrolidone (NMP), and 10.5 kg of ion exchanged water were fed; the resulting mixture was gradually heated to 245°C over approximately three hours while nitrogen at ordinary pressure was passed through the mixture; 14.78 kg of water and 0.28 kg of NMP were distilled off; and then, the reactor container was cooled to 200°C. The amount of water remaining in the system, including the water consumed for hydrolysis of NMP, was 1.06 mol per 1 mol of the fed alkali metal sulfide. In addition, the scattered amount of hydrogen sulfide was 0.02 mol per 1 mol of the fed alkali metal sulfide.

Then, the resulting solution was cooled to 200°C; 10.48 kg (71.27 mol) of p-dichlorobenzene and 9.37 kg (94.50 mol) of NMP were added to the solution; the reactor container was sealed with nitrogen gas inside; and the resulting mixture was heated from 200°C to 270°C at a rate of 0.6°C/min. with stirring at 240 rpm. The resulting mixture was allowed to react at 270°C for 100 minutes; then, the bottom stop valve of the autoclave was opened; the contents were placed in a container with an agitator and flashed for 15 minutes while pressurized with nitrogen; and the resulting solution was stirred at 250°C for a while to remove the majority of the NMP

The obtained solid and 76 L of ion exchanged water were put into an autoclave with an agitator, washed at 70°C for 30 minutes, and then subjected to suction filtration through a glass filter. Then, 76 liters of ion exchanged water heated to 70°C was poured into a glass filter to subject the mixture to suction filtration to obtain a cake.

The obtained cake and 90 L of ion exchanged water were fed into an autoclave with an agitator, and to the resulting mixture, acetic acid was added so that the pH could be 7. The inside of the autoclave was purged with nitrogen, then heated to 192°C, and held for 30 minutes. Then, the autoclave was cooled, and the contents were taken out.

The contents were subjected to suction filtration through a glass filter; then, to the resulting product, 76 liters of ion exchanged water at 70°C was poured; and the resulting mixture was subjected to suction filtration to obtain a cake. The obtained cake was dried at 120°C under a nitrogen gas stream to obtain a dried PPS. The obtained dried PPS resin was entirely soluble in 1-chloronaphthalene at 210°C, and the results of measurement by GPC exhibited a weight average molecular weight of 20,000 and a dispersity of 3.10.

<Production of polyarylene sulfide (B'-2)>

Into a 70-L-volume autoclave with an agitator and a bottom stop valve, 8.27 kg (70.00 mol) of 47.5% sodium hydrosulfide, 2.94 kg (70.63 mol) of 96% sodium hydroxide, 11.45 kg (115.50 mol) of N-methyl-2-pyrrolidone (NMP), 1.89 kg (23.1 mol) of sodium acetate, and 5.50 kg of ion exchanged water were fed; the resulting mixture was gradually heated to 245°C over approximately three hours while nitrogen at ordinary pressure was passed through the mixture; 9.77 kg of water and 0.28 kg of NMP were distilled off; and then, the reactor container was cooled to 200°C. The amount of water remaining in the system, including the water consumed for hydrolysis of NMP, was 1.06 mol per 1 mol of the fed alkali metal sulfide. In addition, the scattered amount of hydrogen sulfide was 0.02 mol per 1 mol of the fed alkali metal sulfide.

Then, the resulting solution was cooled to 200°C; 10.42 kg (70.86 mol) ofp-dichlorobenzene and 9.37 kg (94.50 mol) of NMP were added to the solution; the reactor container was sealed with nitrogen gas inside; and the resulting mixture was heated from 200°C to 270°C at a rate of 0.6°C/min. with stirring at 240 rpm, and allowed to react at 270°C for 140 minutes. Then, 2.40 kg (133 mol) of water was forced into the mixture while the mixture was cooled from 270°C to 250°C over 15 minutes. Subsequently, the mixture was gradually cooled from 250°C to 220°C over 75 minutes, followed by being rapidly cooled to the vicinity of room temperature, and the contents were taken out.

The contents were diluted with about 35 L of NMP to be formed into slurry, which was stirred at 85°C for 30 minutes, and then, the resulting slurry was separated by filtration with an 80 wire mesh (having an opening of 0.175 mm) to obtain a solid. In the same manner, the obtained solid was washed with about 35 L of NMP and separated by filtration. The following operation was repeated a total of three times: the obtained solid was diluted with 70 L of ion exchanged water, stirred at 70°C for 30 minutes, and then separated by filtration with a 80 wire mesh to collect a solid. The obtained solid and 32 g of acetic acid were diluted with 70 L of ion exchanged water, stirred at 70°C for 30 minutes,

and then filtrated with a 80 wire mesh. The further obtained solid was diluted with 70 L of ion exchanged water, stirred at 70°C for 30 minutes, and then filtrated with a 80 wire mesh to collect a solid. The solid thus obtained was dried at 120°C under a nitrogen gas stream to obtain a dried PPS. The obtained dried PPS resin was entirely soluble in 1-chloronaphthalene at 210°C, and the results of measurement by GPC exhibited a weight average molecular weight of 48,600 and a dispersity of 2.66.

<Production of polyarylene sulfide prepolymers (B-1) and (B-2)>

[Step 1: synthesis of reaction mixture]

Into a stainless steel-made autoclave with an agitator, 28.1 g of aqueous 48 wt% sodium hydrosulfide solution (0.241 mol of sodium hydrosulfide) as a sulfidizing agent, 21.1 g of aqueous 48 wt% sodium hydroxide solution (0.253 mol of sodium hydroxide), 35.4 g (0.241 mol) ofp-dichlorobenzene (p-DCB) as a dihalogenated aromatic compound, and 600 g (6.05 mol) of N-methyl-2-pyrrolidone (NMP) as an organic polar solvent were fed to prepare a reaction raw material. The amount of water contained in the raw material was 25.6 g (1.42 mol), and the amount of solvent per 1 mol of sulfur content in the reaction mixture (per 1 mol of sulfur atoms contained in the sodium hydrosulfide fed as a sulfidizing agent) was approximately 2.43 L. In addition, the amount of arylene unit (corresponding to the fed p-DCB) per 1 mol of sulfur content in the reaction mixture (per 1 mol of sulfur atoms contained in the fed sodium hydrosulfide) was 1.00 mol.

The inside of the autoclave was purged with nitrogen gas and then sealed, and the reaction mixture was heated from room temperature to 200°C over approximately one hour with stirring at 400 rpm. Then, the reaction mixture was heated from 200°C to 250°C over approximately 0.5 hours. At this stage, the gauge pressure in the reactor was 1.05 MPa. Then, the reaction mixture was held at 250°C for two hours, so that the reaction mixture was heated and reacted.

An NMP solution of *p*-DCB (3.54 g of *p*-DCB dissolved in 10 g of NMP) was fed into a 100-mL-volume small tank installed on the upper portion of the autoclave via a high-pressure valve. The inside of the small tank was pressurized to approximately 1.5 MPa, and then, the valve on the lower portion of the tank was opened to feed the NMP solution ofp-DCB into the autoclave. The wall surface of the small tank was washed with 5 g of NMP, and then, this NMP was also fed into the autoclave. This operation caused the amount of arylene unit (corresponding to the total amount of the fed *p*-DCB) per 1 mol of sulfur content in the reaction mixture to be 1.10 mol. After this additional feed was finished, the heating was continued at 250°C for another one hour to advance the reaction. Then, the resulting mixture was cooled to 230°C over approximately 15 minutes; then, the high-pressure valve installed on the upper portion of the autoclave was gradually opened to discharge vapor mainly composed of NMP; this vapor component was condensed in a cooling pipe of a water cooling type to collect approximately 391 g of liquid component; and then, the high-pressure valve was closed to hermetically seal the autoclave. Then, the resulting mixture was rapidly cooled to the vicinity of room temperature, and collected.

Part of the obtained reaction mixture was dispersed in a large excess of water to collect a water-insoluble component, and the collected water-insoluble component was dried to obtain a solid content. A structural analysis was made by infrared spectroscopic analysis, resulting in making it possible to verify that this solid content was a compound composed of an arylene sulfide unit.

The obtained reaction mixture and the liquid component collected by a deliquoring operation after the reaction were analyzed by gas chromatography, high performance liquid chromatography, and ion chromatography, revealing that the reaction consumption rate of the sodium hydrosulfide used as a sulfidizing agent was 97%.

[Step 2: Collection of (B-2) linear polyarylene sulfide]

The reaction mixture was subjected to solid-liquid separation by the above-mentioned solid separation operation to obtain (B-2) a linear polyarylene sulfide as a solid content. To the obtained wet solid content, an approximately ten times larger amount of ion exchanged water was added so that the solid content could be dispersed to be slurried; and after being stirred at 80°C for 30 minutes, the obtained slurry repeatedly underwent the following operation a total of four times: suction filtration through a glass filter having an opening of 10 to 16 μm. The obtained solid content was treated in a vacuum dryer at 70°C for three hours to obtain a dry solid as (B-2) a linear polyarylene sulfide.

As a result of the analysis of this isolated dried solid, the absorption spectrum in the infrared spectroscopic analysis showed that this solid was polyarylene sulfide, had a weight average molecular weight of 9,000, and contained the cyclic polyarylene sulfide in an amount of 1 wt%.

[Step 3: Collection of (B-1) cyclic polyarylene sulfide]

Into a 300-mL-flask, 100 g of filtrate (2 wt% as the concentration of a cyclic polyarylene sulfide) obtained by the solid-liquid separation operation in the above-mentioned step 2 was fed, and the inside of the flask was purged with

nitrogen. Then, the filtrate was heated to 100°C with stirring, and then cooled to 80°C. Then, 33 g of water was slowly added dropwise using a pump over approximately 15 minutes with stirring at a temperature of 80°C in the system. Here, the weight ratio of NMP to water was 75:25 in the filtrate mixture after completion of the dropwise addition of water. When the water was added to this filtrate, the dropwise addition of water was accompanied by a decrease to approximately 75°C in the temperature of the mixture; in addition, a solid content was gradually generated in the mixture; and, at a stage when the dropwise addition of water was completed, the mixture was slurried with the solid content dispersed therein. This slurry was cooled to approximately 30°C with stirring over approximately one hour, the stirring was then continued at the vicinity of room temperature for approximately 30 minutes, and then, the obtained slurry was subjected to suction filtration through a glass filter having an opening of 10 to 16 μm. The obtained solid content (containing a mother liquid) was dispersed in approximately 500 g of water, the dispersion liquid was stirred at 80°C for 15 minutes, and then, in the same manner as above-mentioned, the operation of suction filtration through a glass filter was repeated a total of ten times. The obtained solid content was treated in a vacuum dryer at 70°C for three hours to obtain a dry solid as (B-1) a cyclic polyarylene sulfide.

The dried solid was analyzed by HPLC with the result the cyclic polyarylene sulfide having 4 to 15 units was detected. In addition, the cyclic polyarylene sulfide content of the dried solid was 98 wt%, and the obtained dried solid was found to be a high purity cyclic polyarylene sulfide. In addition, the result of the GPC measurement revealed that (A) this cyclic polyarylene sulfide had a weight average molecular weight of 1,000.

<Production of polyarylene sulfide (B'-3)>

Into a stainless steel-made reactor 1 with an agitator, 1,169 kg (10 kmol) of aqueous 48% sodium hydrosulfide solution, 841 kg (10.1 kmol) of aqueous 48% sodium hydroxide solution, 1,983 kg (20 kmol) of N-methyl-2-pyrrolidone (hereinafter referred to as NMP for short in some cases), and 322 kg (1.96 kmol) of aqueous 50% sodium acetate solution were fed; and the resulting mixture was gradually heated to approximately 240°C over approximately three hours while nitrogen at ordinary pressure was passed through the mixture, so that 1,280 kg of water and 26 kg of NMP were distilled off via a rectifying column. In this regard, hydrogen sulfide in an amount of 0.02 mol per 1 mol of sulfur content fed during this deliquoring operation was scattered out of the system. Then, the resulting mixture was cooled to approximately 200°C, and then, the contents were transferred to another stainless steel-made reactor 2 with an agitator. Into the reactor 1, 932 kg of NMP was fed, the inside was washed, and the washing was transferred to the reactor 2. Next, 1,477 kg (10.0 kmol) ofp-dichlorobenzene was added to the reactor 2, which was sealed with nitrogen gas inside, and the resulting mixture was heated to 200°C with stirring. Then, the mixture was heated from 200°C to 270°C at a rate of 0.6°C/min., and held at this temperature for 140 minutes. The mixture was cooled to 250°C at a rate of 1.3°C/min. while 353 kg (19.6 kmol) of water was forced into the mixture over 15 minutes. Then, the mixture was cooled to 220°C at a rate of 0.4°C/min., and then, rapidly cooled to approximately 80°C to obtain a slurry (A). This slurry (A) was diluted with 2,623 kg of NMP to obtain a slurry (B). The slurry (B) heated to 80°C was separated by filtration through a sieve (of 80 mesh and having an opening of 0.175 mm), so that a granular polyphenylene sulfide resin containing slurry was obtained as a mesh-on component, and that a slurry (C) was obtained as a filtrate component.

Into a stainless steel-made reactor, 1,000 kg of the slurry (C) was fed; the inside of the reactor was purged with nitrogen; and then, the slurry was treated at 100 to 150°C under reduced pressure with stirring for approximately 1.5 hours to remove the majority of the solvent. Then, 1,200 kg of ion exchanged water (1.2 times the amount of the slurry (C)) was added to the slurry, and then, the resulting mixture was stirred at approximately 70°C for 30 minutes to be slurried. This slurry was filtrated to obtain a white solid. To the obtained solid, 1,200 kg of ion exchanged water was added; the resulting mixture was stirred at 70°C for 30 minutes to be slurried again; and the slurry was filtrated in the same manner, then dried at 120°C under a nitrogen atmosphere, and dried under reduced pressure at 80°C to obtain 11.6 kg of dried solid. The absorption spectrum in the infrared spectroscopic analysis of this solid revealed that this solid was a polyphenylene sulfide mixture composed of a polyphenylene sulfide unit. This polyphenylene sulfide mixture was subjected to GPC measurement, and the chromatogram was analyzed, showing the result that the weight fraction of the components having a molecular weight of 5,000 or less was 39%, and that the weight fraction of the components having a molecular weight of 2,500 or less was 32%.

The polyphenylene sulfide mixture in an amount of 10 kg was taken up, and the mixture and 150 kg of chloroform used as a solvent were stirred under reflux at ordinary pressure for one hour, so that the polyphenylene sulfide mixture and the solvent were brought in contact with each other. Then, the resulting mixture was subjected to solid-liquid separation by hot filtration to obtain an extract. To the solid separated here, 150 kg of chloroform was added; and the resulting mixture was stirred under reflux at ordinary pressure for one hour, and then subjected to solid-liquid separation by hot filtration in the same manner to obtain an extract, which was mixed with the previously obtained extract. The resulting extract was in slurry form, partially containing a solid component at room temperature.

This extract slurry was treated under reduced pressure to remove part of chloroform until the weight of the extract became approximately 40 kg; and a slurry was thus obtained. Then, this liquid mixture in slurry form was added

dropwise to 600 kg of methanol with stirring. A precipitate generated in this manner was filtrated to collect a solid content, which was then dried under reduced pressure at 80°C to obtain 3.0 kg of white powder. The yield of the white powder was 30% with respect to the polyphenylene sulfide mixture used.

The absorption spectrum in the infrared spectroscopic analysis of this white powder verified that this white powder was a compound composed of a polyphenylene sulfide unit. In addition, the molecular weight information from MALDI-TOF-MS as well as the mass spectrum analysis (device: M-1200H, manufactured by Hitachi, Ltd.) of a component separated by high performance liquid chromatography (the device: LC-10, manufactured by Shimadzu Corporation; the column: C18; the detector: a photodiode array) revealed that this white powder was a mixture containing, as a main component, a cyclic polyphenylene sulfide having 4 to 12 repeating units, and that the cyclic polyphenylene sulfide had a weight fraction of 94%. In addition, a GPC measurement of this mixture was made, showing the result that the mixture had a weight average molecular weight of 900.

The obtained cyclic polyphenylene sulfide mixture was fed into a 5-L-volume autoclave with an agitator; the autoclave was purged with nitrogen; and then, the mixture was heated to 320°C for approximately one hour with the pressure in the system reduced to approximately 2 kPa using a vacuum pump. During this, the mixture was stirred at 10 rpm until the internal temperature reached approximately 250°C, and stirred at 50 rpm at 250°C or more. After reaching 320°C, the mixture continued to be stirred at 320°C under reduced pressure for 60 minutes. Then, nitrogen was introduced through the upper portion of the autoclave to pressurize the inside of the reactor; the contents in gut form were taken out through the discharge outlet; and the gut was pelletized to obtain pellets. The obtained pellets were a resin assuming a little black color. An absorption spectrum in infrared spectroscopic analysis revealed that this product had a polyphenylene sulfide structure. In addition, the product was entirely soluble in 1-chloronaphthalene at 210°C. The result of GPC measurement revealed that the obtained polyphenylene sulfide resin had a weight average molecular weight of 55,400 and a dispersity of 2.20.

<Reference Example 3> Carbon fiber bundle

(CF-1): carbon fiber bundle (product name: T700S-12K, manufactured by Toray Industries, Inc.)

<Reference Example 4> (C) anionic polymerization initiator

(C-1) sodium salt of 2-mercaptobenzimidazole (manufactured by Tokyo Chemical Industry Co., Ltd.)

[Examples 1 to 7 and Comparative Examples 1 to 3 (method of producing resin composition pellets)]

The raw materials shown in Table 1 but other than the carbon fiber bundle were dry-blended at the ratios shown in Table 1; the resulting blend was melt-kneaded using a twin-screw extruder, TEX30α, manufactured by Japan Steel Works, Ltd. equipped with a vacuum vent (having a screw diameter of 30 mm, L/D = 45, five kneading portions, and fully intermeshed screws rotating in the same direction) at a screw rotational speed of 300 rpm and a discharge amount of 20 Kg/hr with the cylinder temperature set so that the die outlet resin temperature could be the melting point of the resin composition + 20°C; and the resulting kneaded product was pelletized using a strand cutter, and used for the above-mentioned evaluation. The evaluation results are listed in Table 1.

[Table 1]

| | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|
| (A) Thermoplastic resin having a glass-transition temperature of 100°C or more | (A) Component | | A-1 | A-1 | | | A-1 | A-1 | A-1 | A-1 | A-1 | A-1 |
| | (A) Component amount | parts by weight | 75 | 75 | | | 75 | 75 | 75 | 75 | 75 | 75 |
| | (A) Component | | | | A-2 | | | | | | | |
| | (A) Component amount | parts by weight | | | 75 | | | | | | | |
| | (A) Component | | | | | A-3 | | | | | | |
| | (A) Component amount | parts by weight | | | | 75 | | | | | | |
| | (A) Component | | A-4 | A-4 | A-4 | A-4 | A-4 | A-4 | A-4 | A-4 | A-4 | A-4 |
| | (A) Component amount | parts by weight | 25 | 25 | 25 | 25 | 25 | 25 | 25 | 25 | 25 | 25 |
| (B) Thermoplastic resin having a glass-transition temperature of less than 100°C | (B-1) Component: cyclic polyarylene sulfide | | B-1 | B-1 | B-1 | B-1 | B-1 | B-1 | B-1 | | | |
| | (B-1) Component amount* | parts by weight | 20 | 5 | 20 | 20 | 10 | 24 | 25 | | | |
| | (B-2) Component: linear polyarylene sulfide | | B-2 | B-2 | B-2 | B-2 | B-2 | B-2 | | | | |
| | (B-2) Component amount * | parts by weight | 5 | 20 | 5 | 5 | 10 | 1 | | | | |

(continued)

| | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|
| (B') Thermoplastic resin having a glass-transition temperature of | (B'-1) polyarylene sulfide component | | | | | | | | | B'-1 | | |
| | (B'-1) Component amount * | parts by weight | | | | | | | | 25 | | |
| | (B'-2) polyarylene | | | | | | | | | | B'-2 | |
| less than 100°C | sulfide component | | | | | | | | | | | |
| | (B'-2) Component amount * | parts by weight | | | | | | | | | 25 | |
| | (B'-3) polyarylene sulfide component | | | | | | | | | | | B'-3 |
| | (B'-3) Component amount * | parts by weight | | | | | | | | | | 25 |
| (C) Anionic polymerization initiator | (C) Component | | | | | | | | C-1 | | | |
| | (C) Component amount * | parts by weight | | | | | | | 0.50 | | | |
| Carbon fiber bundle (CF bundle) | CF bundle type | | CF-1 | CF-1 | CF-1 | CF-1 | CF-1 | CF-1 | CF-1 | CF-1 | CF-1 | CF-1 |
| | CF amount | vol% | 60 | 60 | 60 | 60 | 60 | 60 | 60 | 60 | 60 | 60 |

(continued)

| | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|
| Polymer characteristics | Melting point (Tm) | °C | 345 | 344 | 346 | 330 | 343 | 343 | 343 | 343 | 344 | 344 |
| | Melt viscosity | Pa·s | 31 | 35 | 90 | 78 | 33 | 39 | 39 | 52 | 58 | 58 |
| | Glass-transition temperature | °C | 154 | 155 | 154 | 162 | 152 | 153 | 151 | 88/143 | 88/143 | 87/141 |
| | Loss tangent tan δ number of peaks | pce/pcs | 1 | 1 | 1 | 1 | 1 | 1 | 1 | 2 | 2 | 2 |
| | Glass-transition temperature/ heat ed at 400°C for one hour | °C | 154 | 155 | 154 | 162 | 152 | 153 | 152 | 88/143 | 88/143 | 88/143 |
| | Loss tangent tan δ number of peaks/heatedat 400°C for one hour | pce/pcs | 1 | 1 | 1 | 1 | 1 | 1 | 1 | 2 | 2 | 2 |
| Fiber reinforced resin base material/heat resistance | Storage modulus (Measurement temperature 110°C) | GPa | 63 | 62 | 60 | 72 | 61 | 60 | 62 | 39 | 31 | 35 |
| | Storage modulus (Measurement temperature 120°C) | GPa | 63 | 63 | 61 | 70 | 62 | 60 | 62 | 36 | 31 | 35 |
| Impregnation | Melting point (Tm) | - | good | good | not good | not good | good | good | good | not good | not good | not good |

(continued)

| | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|
| properties | + 60°C | | | | | | | | | | | |
| | Melting point (Tm) + 100°C | - | good | good | good | good | good | good | good | good | good | good |
| Surface quality | Melting point (Tm) + 60°C | - | good | good | not good | not good | good | good | good | not good | not good | not good |
| | Melting point (Tm) + 100°C | - | good | good | good | good | good | good | good | good | good | good |

*The (B-1) component amount, (B-2) component amount, (B'-1) component amount, (B'-2) component amount, (B'-3) component amount, and (C) component amount are each a blended amount with respect to a total of 100 parts by weight of the (A) component.

[Examples 1 to 7 and Comparative Examples 1 to 3 (method of producing fiber reinforced resin base material)]

Sixteen bobbins having a carbon fiber bundle (CF-1) wound therearound were provided, and the carbon fiber bundle was continuously sent out from each bobbin through a yarn guide. In an impregnation die, the continuously sent-out carbon fiber bundle was impregnated with the resin composition which was obtained by the above-mentioned method and fed in a constant amount from the loaded feeder. The carbon fiber impregnated with the resin composition in the impregnation die was continuously pultruded out through the nozzle of the impregnation die at a pultrusion rate of 1 m/min. using a take-off roll. A temperature at which the carbon fiber is pultruded refers to a processing temperature. The pultruded carbon fiber bundle was passed through cooling rolls to cool and solidify the resin composition, and wound up by a wind-up machine as a continuous fiber reinforced resin base material. The obtained fiber reinforced resin base material had a thickness of 0.08 mm and a width of 50 mm, the reinforcing fiber was arranged unidirectionally, and the obtained fiber reinforced resin base material had a volume fraction of 60%. The obtained fiber reinforced resin base material was used for the above-mentioned evaluation. The evaluation results are listed together in Table 1.

A comparison between the above-mentioned Examples 1 to 7 and Comparative Examples 1 to 3 has revealed that the fiber reinforced resin base material produced with a resin composition exhibiting a single glass-transition temperature and containing (A) a thermoplastic resin having a glass-transition temperature of 100°C or more and (B) a thermoplastic resin having a glass-transition temperature of less than 100°C makes it possible to achieve a balance between impregnation properties (polymer fluidity) and heat resistance at a high level, and makes it possible to achieve a decrease in voids and an enhancement in surface quality.

Industrial Applicability

The fiber reinforced resin base materials and molded articles thereof in the first and second embodiments of the present invention have excellent characteristics, and thus, can be utilized, through making good use of such characteristics, in various applications for aircraft components, automobile components, electrical and electronic components, construction members, various kinds of containers, daily necessities, household sundries, sanitary goods, and the like. The fiber reinforced resin base materials and molded articles thereof in the embodiments of the present invention are particularly preferably used in applications for aircraft engine peripheral components, aircraft exterior components, automobile body components and vehicle skeletons, automobile engine peripheral components, automobile underhood components, automobile gear components, automobile interior components, automobile exterior components, air intake and exhaust system components, engine cooling water system components, automobile electrical components, electrical and electronic components, and the like, wherein such applications particularly need impregnation properties, heat aging resistance, and surface appearance. Specifically, the fiber reinforced resins and molded articles thereof in the embodiments of the present invention are preferably used for: aircraft engine peripheral components such as fan blades; aircraft-related components such as landing gear pods, winglets, spoilers, edges, rudders, elevators, fairings, and ribs; automobile body components such as seats, front bodies, underbodies, pillars, members, frames, beams, supports, rail, and hinges; automobile engine peripheral components such as engine covers, air intake pipes, timing belt covers, intake manifolds, filler caps, throttle bodies, and cooling fans; automobile underhood components such as cooling fans, radiator tank tops and bases, cylinder head covers, oil pans, brake piping, tubes for fuel piping, and waste gas system components; automobile gear components such as gears, actuators, bearing retainers, bearing cages, chain guides, and chain tensioners; automobile interior components such as change speed lever brackets, steering lock brackets, key cylinders, door inner handles, door handle cowls, room mirror brackets, airconditioner switches, instrumental panels, console boxes, glove boxes, steering wheels, and trim materials; automobile exterior components such as front fenders, rear fenders, fuel lids, door panels, cylinder head covers, door mirror stays, tail gate panels, license garnishes, roof rails, engine mount brackets, rear garnishes, rear spoilers, trunk lids, rocker moldings, moldings, lamp housings, front grills, mud guards, and side bumpers; air intake and exhaust system components such as air intake manifolds, intercooler inlets, turbochargers, exhaust pipe covers, inner bushes, bearing retainers, engine mounts, engine head covers, resonators, and throttle bodies; engine cooling water system components such as chain covers, thermostat housings, outlet pipes, radiator tanks, alternators, and delivery pipes; automobile electrical and electronic components such as connectors, wire harness connectors, motor components, lamp sockets, sensor-mounted switches, and combination switches; electrical and electronic components, examples of which include: electric generators, electric motors, potential transformers, current transformers, voltage regulators, rectifiers, resistors, inverters, relays, contacts for power, switches, circuit breakers, switches, knife switches, multipole rods, motor cases, TV housings, notebook personal computer housings and internal components, CRT display housings and internal components, and printer housings and internal components; mobile terminal housings and internal components such as mobile phones, mobile personal computers, and handheld type mobiles; electrical components such as housings for ICs and LEDs, capacitor seats, fuse holders, gears, cases, and cabinets; electronic components such as connectors, connectors for SMT, card connectors, jacks, coils, coil bobbins, sensors, LED lamps, sockets, resistors, relays, relay cases, reflectors, compact switches, power supply components,

coil bobbins, capacitors, variable capacitor cases, light pick-up chassis, radiators, terminal blocks, transformers, plugs, printed boards, tuners, speakers, microphones, headphones, small motors, magnetic head bases, power modules, Si power modules, SiC power modules, semiconductors, liquid crystals, FDD carriages, FDD chassis, motor brush holders, transformer members, parabolic antennas, and computer-related components; and the like.

## Claims

1. A fiber reinforced resin base material formed by impregnating a continuous reinforcing fiber(s) or a reinforcing fiber material having a discontinuous fiber(s) dispersed therein with a resin composition which exhibits a single glass-transition temperature before and after being heated at 400°C for one hour,
   wherein said resin composition is composed of (A) a thermoplastic resin having a glass-transition temperature of 100°C or more and (B) a thermoplastic resin having a glass-transition temperature of less than 100°C.

2. The fiber reinforced resin base material according to claim 1, wherein said single glass-transition temperature is 110°C or more.

3. The fiber reinforced resin base material according to claim 1 or 2, comprising 1 part by weight or more and less than 67 parts by weight of (B) said thermoplastic resin having a glass-transition temperature of less than 100°C with respect to 100 parts by weight of (A) said thermoplastic resin having a glass-transition temperature of 100°C or more.

4. The fiber reinforced resin base material according to any one of claims 1 to 3, wherein (B) said thermoplastic resin having a glass-transition temperature of less than 100°C is a polyarylene sulfide prepolymer.

5. The fiber reinforced resin base material according to claim 4, wherein said polyarylene sulfide prepolymer is composed of a mixture of a cyclic polyarylene sulfide having a weight average molecular weight of 5,000 or less and a linear polyarylene sulfide having a weight average molecular weight of 1,000 or more and less than 15,000.

6. The fiber reinforced resin base material according to any one of claims 1 to 5, wherein (A) said thermoplastic resin having a glass-transition temperature of 100°C or more is at least one selected from a polyimide, polyetheretherketone, polyetherketoneketone, polysulfone, polyarylate, polyphenyleneether, polycarbonate, polyetherimide, polyethersulfone, polyphenylsulfone, polyamideimide, and liquid crystal polymer.

**INTERNATIONAL SEARCH REPORT**

International application No.
PCT/JP2019/026055

A. CLASSIFICATION OF SUBJECT MATTER
Int.Cl. C08J5/04(2006.01)i

According to International Patent Classification (IPC) or to both national classification and IPC

B. FIELDS SEARCHED

Minimum documentation searched (classification system followed by classification symbols)
Int.Cl. C08J5/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 7-316428 A (DAINIPPON INK AND CHEMICALS, INCORPORATED) 05 December 1995, claims, paragraphs [0025]-[0033], [0040], [0044], examples (Family: none) | 1-4, 6<br>1-6 |
| X<br>Y | JP 63-178165 A (PHILIPS PETROLEUM COMPANY) 22 July 1988, claims, page 3, upper left column, line 12 to lower left column, line 10, examples & US 5049446 A claims, column 2, lines 27-60, examples | 1-4, 6<br>1-6 |
| Y | JP 2015-193812 A (TORAY INDUSTRIES, INC.) 05 November 2015, claims, paragraphs [0035]-[0039], examples (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 September 2019 (17.09.2019) | 01 October 2019 (01.10.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | <br><br>Telephone No. |

Form PCT/ISA/210 (second sheet) (January 2015)

**INTERNATIONAL SEARCH REPORT**

International application No.
PCT/JP2019/026055

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2018-76492 A (TORAY INDUSTRIES, INC.) 17 May 2018, claims, examples (Family: none) | 1-6 |
| Y | JP 2008-231237 A (TORAY INDUSTRIES, INC.) 02 October 2008, claims, examples, comparative examples & US 2010/0068518 A1 claims, examples, comparative examples | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008114573 A
- WO 2017022835 A
- WO 2016190194 A
- WO 2013008720 A